(19) **Europäisches Patentamt / European Patent Office / Office européen des brevets**

(11) **EP 4 471 616 A1**

(12) **EUROPEAN PATENT APPLICATION**
published in accordance with Art. 153(4) EPC

(43) Date of publication:
04.12.2024 Bulletin 2024/49

(21) Application number: 23759097.1

(22) Date of filing: 17.02.2023

(51) International Patent Classification (IPC):
*G06F 16/332* (2019.01)    *G06F 16/33* (2019.01)
*G06N 3/04* (2023.01)

(86) International application number:
PCT/CN2023/076756

(87) International publication number:
WO 2023/160472 (31.08.2023 Gazette 2023/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.02.2022 CN 202210164992

(71) Applicant: Huawei Technologies Co., Ltd.
Shenzhen, Guangdong 518129 (CN)

(72) Inventors:
• LI, Pengfei
  Shenzhen, Guangdong 518129 (CN)
• LI, Liangyou
  Shenzhen, Guangdong 518129 (CN)
• ZHANG, Meng
  Shenzhen, Guangdong 518129 (CN)

(74) Representative: Pfenning, Meinig & Partner mbB
Patent- und Rechtsanwälte
Theresienhöhe 11a
80339 München (DE)

(54) **MODEL TRAINING METHOD AND RELATED DEVICE**

(57) This application may be applied to the artificial intelligence field, and specifically discloses a model training method. The method includes: obtaining a second embedding vector input to a decoder in a pre-trained language model, where the second embedding vector corresponds to a second data sequence, the second data sequence includes first sub-data, a masked to-be-predicted data unit, and second sub-data, the first sub-data is located before the to-be-predicted data unit in the second data sequence, and the second sub-data is located after the to-be-predicted data unit in the second data sequence; obtaining a hidden state based on a first embedding vector by using an encoder in the pre-trained language model PLM; and predicting the to-be-predicted data unit based on the first sub-data, the second sub-data, and the hidden state by using the decoder in the PLM and an output layer of the decoder. In this application, a corresponding PLM does not need to be pre-trained for each type of sequence generation task, thereby greatly reducing resources required for training the PLM.

Obtain a first embedding vector and a second embedding vector, where the first embedding vector corresponds to a first data sequence, the second embedding vector corresponds to a second data sequence, the second data sequence includes first sub-data, a masked to-be-predicted data unit, and second sub-data, the first sub-data is located before the to-be-predicted data unit in the second data sequence, and the second sub-data is located after the to-be-predicted data unit in the second data sequence — 601

Obtain a hidden state based on the first embedding vector by using an encoder in a pre-trained language model PLM — 602

Predict the to-be-predicted data unit based on the first sub-data, the second sub-data, and the hidden state by using a decoder in the PLM and an output layer of the decoder, to obtain a first predicted data unit — 603

Update the encoder and the decoder based on a difference between the first predicted data unit and the to-be-predicted data unit — 604

FIG. 6a

EP 4 471 616 A1

**Description**

This application claims priority to Chinese Patent Application No. 202210164992.6, filed with the China National Intellectual Property Administration on February 22, 2022 and entitled "MODEL TRAINING METHOD AND RELATED DEVICE", which is incorporated herein by reference in its entirety.

**TECHNICAL FIELD**

This application relates to the artificial intelligence field, and in particular, to a model training method and a related device.

**BACKGROUND**

Artificial intelligence (artificial intelligence, AI) is a theory, a method, a technology, and an application system in which human intelligence is simulated, extended, and expanded by using a digital computer or a machine controlled by a digital computer, to perceive an environment, obtain knowledge, and achieve an optimal result based on the knowledge. In other words, artificial intelligence is a branch of computer science and is intended to understand essence of intelligence and produce a new intelligent machine that can react in a manner similar to human intelligence. Artificial intelligence is to research design principles and implementation methods of various intelligent machines, so that the machines have perception, inference, and decision-making functions.

Sequence-to-sequence natural language generation is a very important direction in natural language processing tasks, and an encoder-decoder design framework is often used. Sequence generation tasks may be classified into autoregressive generation and non-autoregressive (parallel) generation based on different sequence generation modes. Autoregressive generation means that in a process of generating a target sequence, a first character of the generated target sequence is first predicted, and then the entire target sequence is predicted step by step based on generated subsequences. Non-autoregressive generation means that a complete target sequence is generated in parallel during decoding, and no step-by-step iteration process is required, thereby greatly reducing waiting time for generating the target sequence. Non-autoregressive generation becomes increasingly important for tasks that have high requirements for real-time performance, such as translation and dialogues.

In a sequence generation task, "pre-training-fine-tuning" is a standard paradigm for improving model performance. However, for a sequence-to-sequence generation task, an existing pre-training solution focuses only on left-to-right autoregressive generation, in other words, only preceding text information of a data sequence can be viewed in a pre-training process. Therefore, when a downstream task is fine-tuned, another decoding policy cannot be extended. With launch of large pre-trained models such as a generative pre-trained transformer 3 (generative pre-trained transformer 3, GPT-3) and Pangu, parameters of the models become increasingly large, and pre-training costs become increasingly high. If one time of pre-training can adapt to only a single downstream task, one time of pre-training needs to be performed for each type of generation policy at high costs, which consumes excessive resources.

**SUMMARY**

This application provides a model training method. A corresponding PLM does not need to be pre-trained for each type of sequence generation task, thereby greatly reducing resources (for example, a computing resource, a storage resource, and a time resource) required for training the PLM.

According to a first aspect, this application provides a model training method. The method includes: obtaining a first embedding vector and a second embedding vector, where the first embedding vector corresponds to a first data sequence, the second embedding vector corresponds to a second data sequence, the second data sequence includes first sub-data, a masked to-be-predicted data unit, and second sub-data, the first sub-data is located before the to-be-predicted data unit in the second data sequence, and the second sub-data is located after the to-be-predicted data unit in the second data sequence; obtaining a hidden state based on the first embedding vector by using an encoder in a pre-trained language model PLM; predicting the to-be-predicted data unit based on the first sub-data, the second sub-data, and the hidden state by using a decoder in the PLM and an output layer of the decoder, to obtain a first predicted data unit; and updating the encoder and the decoder based on a difference between the first predicted data unit and the to-be-predicted data unit.

In the foregoing manner, a pre-training architecture of an encoder and a bidirectional decoder is used, and in a training process, the decoder can view both preceding text information and following text information. Each of other types of sequence generation tasks (autoregression: from left to right or from right to left; and non-autoregression: full non-autoregression, semi-non-autoregression, and the like) may be equivalent to a subset of the PLM in this embodiment of this application. This is equivalent to that the PLM obtained according to the training method in this embodiment of this application can have a good capability of adapting to the other types of sequence generation tasks (autoregression: from left to right or from right to left; and non-autoregression: full non-autoregression, semi-non-autoregression, and the like). In other words, even if the other types of sequence generation tasks are used during subsequent fine-tuning, the PLM obtained according to the training method in this embodiment of this application can achieve good model precision. A corresponding PLM does not need to be pre-trained for each type of sequence generation task, thereby greatly reducing resources (for example, a computing resource, a storage resource, and a time resource) required for training the PLM.

In a possible implementation, the method further includes: obtaining a first initial data sequence; and determining, in a probability sampling manner, whether at least one data unit in the first initial data sequence is masked, to obtain the second data sequence, where a probability value obtained through probability sampling is used as a probability that the at least one data unit is masked.

In a possible implementation, the method further includes: obtaining a second initial data sequence; and determining, in the probability sampling manner, whether at least one data unit in the second initial data sequence is masked, to obtain the first data sequence, where when the probability sampling is performed, a probability that a data unit in the first initial data sequence is masked is greater than a probability that a data unit in the second initial data sequence is masked.

In a possible implementation, a mask probability may be dynamically sampled, where "dynamically" means that a probability that each data unit in a data sequence is masked is dynamic.

In a possible implementation, a probability value may be obtained by sampling each data unit in the at least one data unit (for example, the at least one data unit may be all data units in the second initial data sequence) in the second initial data sequence in a probability interval, and the probability value obtained through probability sampling is used as a probability that the at least one data unit is masked. For example, the probability value may be compared with another probability value obtained through sampling in another probability interval, to determine whether to perform a masking operation on the data unit.

An embedding vector generated based on the first data sequence may be used as an input of the encoder in the PLM, and an embedding vector generated based on the second data sequence may be used as an input of the decoder in the PLM. The foregoing masking operations respectively performed on the first data sequence and the second data sequence may be referred to as dynamic dual masking operations. The input of the encoder and the input of the decoder may be separately masked through the dynamic dual masking operations, and pre-training of the encoder and the decoder may be completed at the same time in a subsequent training process. In addition, dynamically sampling the mask probability can avoid an excessively high mask probability, to avoid a small amount of valid information in an entire batch during model training.

In a possible implementation, when the probability sampling is performed, the probability that the data unit in the first initial data sequence is masked is greater than the probability that the data unit in the second initial data sequence is masked. A dynamic masking operation is set to ensure that a mask proportion of the decoder is higher than that of the encoder, so that the decoder can fully obtain information from the encoder side during prediction, thereby improving model precision of a trained pre-trained model.

In a possible implementation, the PLM is used to implement a target task, the first data sequence (optionally, the first data sequence on which masking is not performed) may be original data obtained before the target task is executed, and the second data sequence (optionally, the second data sequence on which masking is not performed) may be target data obtained after the target task is executed. The target task may be a translation task, a natural language generation task, or the like. The first data sequence and the second data sequence may form a training sample, and the PLM needs to generate the second data sequence based on the first data sequence.

For example, the target task is the translation task. The first data sequence and the second data sequence are data having same semantics and expressed by using different language types.

In a possible implementation, the PLM may be used to implement a digest generation task of a text. In this case, the original data may be a source corpus from which a digest needs to be extracted, and the target data may be a digest text that needs to be generated.

In a possible implementation, the PLM may be used to implement a text reply task. In this case, the original data may be a source corpus that needs to be replied, and the target data may be reply content for the source corpus.

In a possible implementation, the method further includes: predicting a masked data unit in the first data sequence by using an output layer of the encoder in the PLM, to obtain a second predicted data unit; and updating the encoder based on a difference between the second predicted data unit and an unmasked data unit in the first data sequence.

In a possible implementation, an output layer similar to the decoder may be added to an output side of the encoder. For example, the output layer may include a fully connected layer and a softmax normalization layer, and is used to predict a masked data unit in the first data sequence.

In a possible implementation, the masked data unit in the first data sequence may be predicted by using the output layer of the encoder in the PLM, to obtain the second predicted data unit, and the encoder is updated based on the difference between the second predicted data unit and the unmasked data unit in the first data sequence.

A fully connected network at the output layer of the encoder may map an output of the encoder to a fixed dimension (a dimension of a vocabulary size), and then use a softmax normalization function to obtain a probability that a target word occurs at each position. The target word herein may be a masked data unit (for example, the second predicted data unit) in the first data sequence. During training, a prediction accuracy degree of the model on current data is calculated by calculating a log-likelihood (taking a log of a probability) of a position corresponding to the target word.

In the foregoing manner, when the PLM is trained, the encoder and the decoder may be pre-trained at the same time, and joint training is effectively performed on the two modules.

In a possible implementation, the PLM may be used to implement a sequence conversion task (for example, a translation task) between texts of different language types. A part of data units in an original source corpus (for example, a third initial data sequence in this embodiment of this application) may be replaced (replaced with data units having same semantics and expressed by using another language type), so that precision of sequence conversion between a plurality of languages by the PLM can be improved.

In a possible implementation, the third initial data sequence may be obtained, where the second data sequence and the third initial data sequence are texts having same semantics and expressed by using different language types, and a first data unit in the third initial data sequence and the to-be-predicted data unit have same semantics; and the first data unit in the third initial data sequence is replaced with a second data unit, to obtain the first data sequence, where the second data unit and the first data unit have same semantics, and are expressed by using different language types.

Same semantics herein may be understood as expressing same or similar semantics. Because syntax and language environments of different language types are not limited, same semantics in this embodiment of this application is not limited to completely consistent semantics.

In addition to replacing the first data unit in the third initial data sequence with the second data unit, other processing (for example, a masking operation or an operation of another data unit) may be further performed on the third initial data sequence. In this embodiment of this application, obtaining the first data sequence only by replacing the first data unit in the third initial data sequence with the second data unit is not limited.

In a possible implementation, the first data unit may be randomly selected from the third initial data sequence. For example, any data unit in the third initial data sequence may be selected as the first data unit. A data unit whose semantics is the same as or similar to that of the first data unit and that is expressed by using a different language type may be retrieved from a language library as the second data unit, and the first data unit in the third initial data sequence is replaced with the second data unit, to obtain the first data sequence.

In a possible implementation, the second data unit and the first initial data sequence are also expressed by using different language types, that is, language types of any two of the first initial data sequence, the second initial data sequence, and the second data unit are different.

In a possible implementation, the method further includes: obtaining a fourth initial data sequence; and masking a data unit that has same semantics as the first data unit and that is in the fourth initial data sequence, to obtain the second data sequence.

In a possible implementation, after a first data unit in the second initial data sequence is replaced with a second data unit, a masking operation may be performed on a data unit that has same semantics as the first data unit and that is in the first initial data unit. Because the data unit obtained after the masking operation needs to be predicted in a training process of the PLM, the PLM may have a text understanding capability of a richer language type.

In a possible implementation, the fourth initial data sequence may be obtained; and the data unit (for example, the data unit may be the to-be-predicted data unit in this embodiment of this application) that has the same semantics as the first data unit and that is in the fourth initial data sequence is masked, to obtain the second data sequence. In the foregoing manner, external knowledge is introduced to combine code-switching with a masking operation, so that a semantic representation capability of the model is more fully trained.

In a possible implementation,

the first sub-data or the second sub-data includes an unmasked data unit, and the second embedding vector includes semantic information of the unmasked data unit and a position relationship between the unmasked data unit and another data unit in the second data sequence;
the first sub-data or the second sub-data includes a masked data unit, and the second embedding vector includes a position relationship between the masked data unit and another data unit in the second data sequence; or
the second embedding vector includes a position relationship between the to-be-predicted data unit and another data unit in the second data sequence.

In a possible implementation, the first data sequence on which a masking operation is not performed and the second data sequence on which a masking operation is not performed are same data sequences; or
the first data sequence on which a masking operation is not performed and the second data sequence on which a masking operation is not performed are different data sequences on which sample labeling is performed.

In a possible implementation, the first data sequence and the second data sequence are text data.

According to a second aspect, this application provides a model training apparatus. The apparatus includes:

an obtaining module, configured to obtain a first embedding vector and a second embedding vector, where the first embedding vector corresponds to a first data sequence, the second embedding vector corresponds to a second data sequence, the second data sequence includes first sub-data, a masked to-be-predicted data unit, and second sub-data, the first sub-data is located before the to-be-predicted data unit in the second data sequence, and the second sub-data is located after the to-be-predicted data unit in the second data sequence;

an encoding module, configured to obtain a hidden state based on the first embedding vector by using an encoder in a pre-trained language model PLM;

a decoding module, configured to predict the to-be-predicted data unit based on the first sub-data, the second sub-data, and the hidden state by using a decoder in the PLM and an output layer of the decoder, to obtain a first predicted data unit; and

a training module, configured to update the encoder and the decoder based on a difference between the first predicted data unit and the to-be-predicted data unit.

In a possible implementation, the obtaining module is further configured to:

obtain a first initial data sequence; and

determine, in a probability sampling manner, whether at least one data unit in the first initial data sequence is masked, to obtain the second data sequence, where a probability value obtained through probability sampling is used as a probability that the at least one data unit is masked.

In a possible implementation, the obtaining module is further configured to:

obtain a second initial data sequence; and

determine, in the probability sampling manner, whether at least one data unit in the second initial data sequence is masked, to obtain the first data sequence, where when the probability sampling is performed, a probability that a data unit in the first initial data sequence is masked is greater than a probability that a data unit in the second initial data sequence is masked.

In a possible implementation, the encoding module is further configured to:

predict a masked data unit in the first data sequence by using an output layer of the encoder in the PLM, to obtain a second predicted data unit; and

the training module is further configured to update the encoder based on a difference between the second predicted data unit and an unmasked data unit in the first data sequence.

In a possible implementation, the PLM is used to implement a sequence conversion task between texts of different language types; and the obtaining module is further configured to:

obtain a third initial data sequence, where the second data sequence and the third initial data sequence are texts having same semantics and expressed by using different language types, and a first data unit in the third initial data sequence and the to-be-predicted data unit have same semantics; and

replace the first data unit in the third initial data sequence with a second data unit, to obtain the first data sequence, where the second data unit and the first data unit have same semantics, and are expressed by using different language types.

In a possible implementation, the obtaining module is further configured to:

obtain a fourth initial data sequence; and

mask a data unit that has same semantics as the first data unit and that is in the fourth initial data sequence, to obtain the second data sequence.

In a possible implementation,

the first sub-data or the second sub-data includes an unmasked data unit, and the second embedding vector includes semantic information of the unmasked data unit and a position relationship between the unmasked data unit and another data unit in the second data sequence;

the first sub-data or the second sub-data includes a masked data unit, and the second embedding vector includes a position relationship between the masked data unit and another data unit in the second data sequence; or

the second embedding vector includes a position relationship between the to-be-predicted data unit and another data unit in the second data sequence.

In a possible implementation, the first data sequence on which a masking operation is not performed and the second data sequence on which a masking operation is not performed are same data sequences; or

the first data sequence on which a masking operation is not performed and the second data sequence on which a masking operation is not performed are different data sequences on which sample labeling is performed.

In a possible implementation, the first data sequence and the second data sequence are text data.

According to a third aspect, an embodiment of this application provides a training device that may include a memory, a processor, and a bus system. The memory is configured to store a program. The processor is configured to execute the program in the memory, to perform the method in any one of the first aspect and the optional implementations of the first aspect.

According to a fourth aspect, an embodiment of this application further provides a data processing method. The method includes:

obtaining an updated PLM and to-be-processed data that are obtained according to the method according to the first aspect, where the updated PLM may include an updated encoder and an updated decoder; and processing the to-be-processed data by using the updated PLM, to obtain a processing result.

The to-be-processed data may be text data. For details, refer to the descriptions about the data sequence in the first aspect in the foregoing embodiment.

According to a fifth aspect, an embodiment of this application further provides a data processing apparatus. The apparatus is configured to: obtain an updated PLM and to-be-processed data that are obtained according to the method according to the first aspect; and process the to-be-processed data by using the updated PLM, to obtain a processing result.

According to a sixth aspect, an embodiment of this application provides an execution device that may include a memory, a processor, and a bus system. The memory is configured to store a program. The processor is configured to execute the program in the memory, to perform the method in any one of the fourth aspect and the optional implementations of the fourth aspect.

According to a seventh aspect, an embodiment of this application provides a computer-readable storage medium. The computer-readable storage medium stores a computer program. When the computer program is run on a computer, the computer is enabled to perform the method in any one of the first aspect and the optional implementations of the first aspect or the method in any one of the fourth aspect and the optional implementations of the fourth aspect.

According to an eighth aspect, an embodiment of this application provides a computer program. When the computer program is run on a computer, the computer is enabled to perform the method in any one of the first aspect and the optional implementations of the first aspect or the method in any one of the fourth aspect and the optional implementations of the fourth aspect.

According to a ninth aspect, this application provides a chip system. The chip system includes a processor, configured to support a training device to implement functions in the foregoing aspects, for example, send or process data or information in the foregoing methods. In a possible design, the chip system further includes a memory. The memory is configured to store program instructions and data that are necessary for an execution device or the training device. The chip system may include a chip, or may include a chip and another discrete component.

The model training method provided in embodiments of this application includes: obtaining the first embedding vector and the second embedding vector, where the first embedding vector corresponds to the first data sequence, the second embedding vector corresponds to the second data sequence, the second data sequence includes the first sub-data, the masked to-be-predicted data unit, and the second sub-data, the first sub-data is located before the to-be-predicted data unit in the second data sequence, and the second sub-data is located after the to-be-predicted data unit in the second data sequence; obtaining the hidden state based on the first embedding vector by using the encoder in the pre-trained language model PLM; predicting the to-be-predicted data unit based on the first sub-data, the second sub-data, and the hidden state by using the decoder in the PLM and the output layer of the decoder, to obtain the first predicted data unit; and updating the encoder and the decoder based on the difference between the first predicted data unit and the to-be-predicted data unit. In the foregoing manner, the pre-training architecture of the encoder and the bidirectional decoder is used, and in the training process, the decoder can view both the preceding text information and the following text information. Each of other types of sequence generation tasks (autoregression: from left to right or from right to left; and non-autoregression: full non-autoregression, semi-non-autoregression, and the like) may be equivalent to a subset of the PLM in this embodiment of this application. This is equivalent to that the PLM obtained according to the training method in this embodiment of this application can have a good capability of adapting to the other types of sequence generation tasks (autoregression: from left to right or from right to left; and non-autoregression: full non-autoregression, semi-non-autoregression, and the like). In other words, even if the other types of sequence generation tasks are used during subsequent fine-tuning, the PLM obtained according to the training method in this embodiment of this application can achieve good model precision. A corresponding PLM does not need to be pre-trained for each type of sequence generation task, thereby greatly reducing resources (for example, a computing resource, a storage resource, and a time resource) required for training the PLM.

**BRIEF DESCRIPTION OF DRAWINGS**

FIG. 1 is a diagram of a structure of an artificial intelligence main framework;
FIG. 2 shows a natural language processing system;
FIG. 3a shows another natural language processing system;
FIG. 3b is a diagram of a structure of a system;
FIG. 3c is a diagram of autoregression;
FIG. 3d is a diagram of non-autoregression;
FIG. 3e is a diagram of semi-non-autoregression;
FIG. 3f is a diagram of a translation model;
FIG. 4 is a diagram of a device related to natural language processing according to an embodiment of this application;
FIG. 5 is a diagram of an architecture of a transformer layer;
FIG. 6a is a diagram of an embodiment of a model training method according to an embodiment of this application;
FIG. 6b is a diagram of an embodiment of a model training method;
FIG. 7 is a diagram of a structure of a neural network model according to an embodiment of this application;
FIG. 8 is a diagram of a structure of a transformer layer;
FIG. 9 is a diagram of operations of an attention head (head);
FIG. 10 is a diagram of a structure of a model training apparatus according to an embodiment of this application;
FIG. 11 is a diagram of a structure of an execution device according to an embodiment of this application;
FIG. 12 is a diagram of a structure of a training device according to an embodiment of this application; and
FIG. 13 is a diagram of a structure of a chip according to an embodiment of this application.

**DESCRIPTION OF EMBODIMENTS**

The following describes embodiments of the present invention with reference to the accompanying drawings in embodiments of the present invention. Terms used in implementations of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, technical solutions provided in embodiments of this application are also applicable to a similar technical problem.

In the specification, claims, and the accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

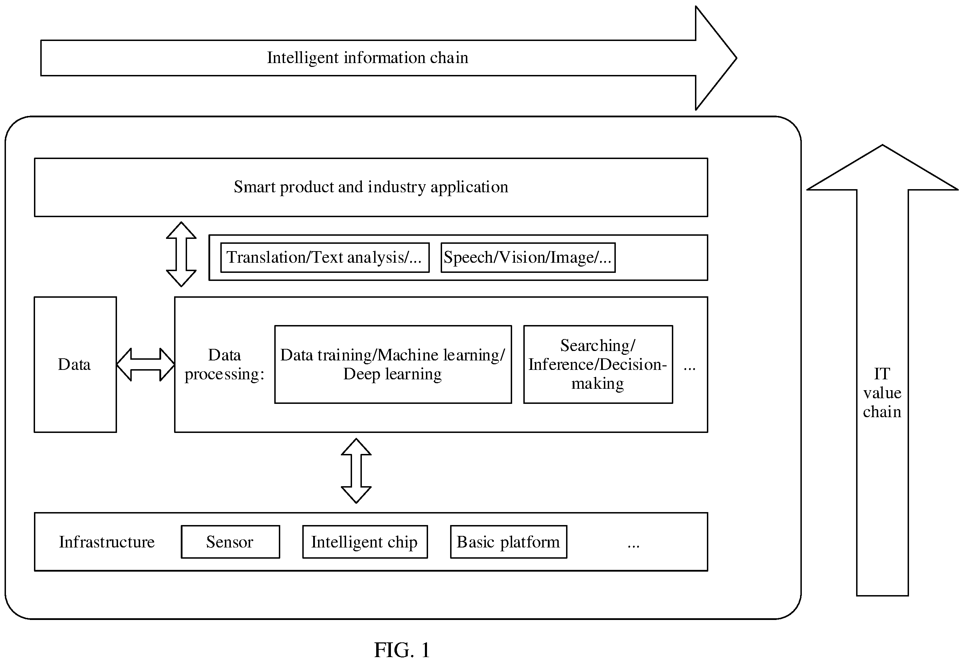

An overall working procedure of an artificial intelligence system is first described. FIG. 1 is a diagram of a structure of an artificial intelligence main framework. The following describes the artificial intelligence main framework from two dimensions: "intelligent information chain" (horizontal axis) and "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip such as a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to graphics, images, speech, and text, and further relates to internet of things data of conventional devices, and includes service data of a conventional system and perception data such as force, displacement, a liquid level, a temperature, and humidity.

(3) Data processing

Data processing usually includes data training, machine learning, deep learning, searching, inference, decision-making, and the like.
Machine learning and deep learning may mean performing symbolic and formal intelligent information modeling, extraction, preprocessing, training, and the like on data.
Inference is a process in which human intelligent inference is simulated in a computer or an intelligent system, and machine thinking and problem resolving are performed by using formal information according to an inference control policy. A typical function is searching and matching.
Decision-making is a process of making a decision after intelligent information is inferred, and usually provides functions such as classification, ranking, and prediction.

(4) General capability

After data processing mentioned above is performed on the data, some general capabilities may further be formed based on a data processing result. For example, the general capabilities may be an algorithm or a general system, for example, translation, text analysis, computer vision processing, speech recognition, and image recognition.

(5) Smart product and industry application

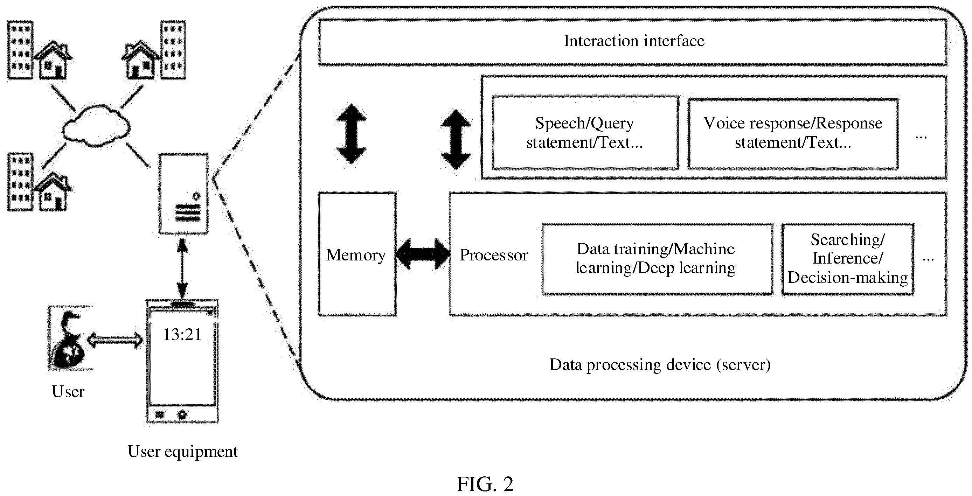

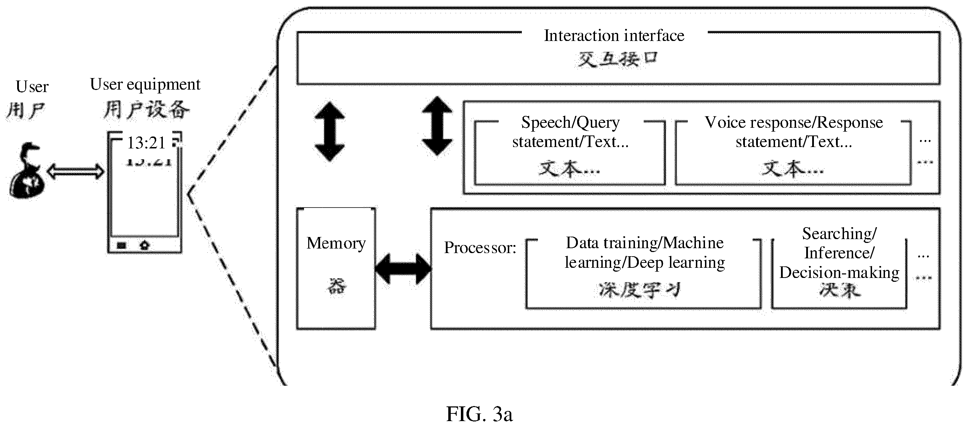

The smart product and industry application are products and applications of the artificial intelligence system in various fields. The smart product and industry application involve packaging overall artificial intelligence solutions, to productize and apply intelligent information decision-making. Application fields mainly include smart terminals, smart transportation, smart health care, autonomous driving, smart cities, and the like.
This application may be applied to the natural language processing field in the artificial intelligence field. The following describes a plurality of application scenarios in which a plurality of applications are implemented in products by using natural language processing as an example.
To better understand the solutions in embodiments of this application, the following briefly describes possible application scenarios of embodiments of this application with reference to FIG. 2 and FIG. 3a.
FIG. 2 shows a natural language processing system. The natural language processing system includes user equipment and a data processing device. The user equipment includes a mobile phone, a personal computer, an information processing center, or another intelligent terminal. The user equipment is an initiator of natural language data processing. As an initiator of a request for language questioning and answering, querying, or the like, a user usually initiates the request via the user equipment.
The data processing device may be a device or a server that has a data processing function, for example, a cloud server, a network server, an application server, or a management server. The data processing device receives a query statement/speech/text or the like from an intelligent terminal through an interaction interface; then performs, by using a memory storing data and a processor processing data, language data processing in a manner of machine learning, deep learning, searching, inference, decision-making, or the like; and feeds back a processing result to the user equipment. The memory in the data processing device may be a general name, and includes a local storage and a database that stores historical data. The database may be on the data processing device, or may be on another network server.

In the natural language processing system shown in FIG. 2, the user equipment may receive an instruction of the user. For example, the user equipment may receive a text segment input by the user, and then initiate a request to the data processing device, so that the data processing device executes a natural language processing application (for example, natural language generation, text classification, text inference, named entity recognition, or translation) on the text segment obtained by the user equipment, to obtain a processing result (for example, a predicted word result, a classification result, an inference result, a named entity recognition result, or a translation result) of the corresponding natural language processing application for the text segment.

Natural language generation is used as an example. Natural language generation (natural language generation) may also be referred to as a text prediction task or a natural language synthesis task, and is a task of generating a missing text or a subsequent text when a text segment is given. Natural language generation is widely used in scenarios such as a search engine and an input method. A following input of the user may be predicted when the user inputs a part of a text, to greatly improve efficiency of using the product by the user. In addition, a text with a missing text may be restored.

For example, in this embodiment of this application, the user equipment may receive a segment of text data input by the user. The text data includes a known word and a to-be-predicted word. The to-be-predicted word is invisible. Only a position of the to-be-predicted word in the text data is known. Then, the user equipment may initiate a request (the request carries the text data) to the data processing device. Therefore, the data processing device predicts the to-be-predicted word in the text data to obtain the to-be-predicted word, and feeds back the to-be-predicted word to the user equipment.

For example, the user equipment may receive a segment of text data input by the user, and then initiate a request to the data processing device. Therefore, the data processing device performs entity classification on the segment of text data to obtain an entity classification result for the segment of text data, and feeds back the entity classification result to the user equipment.

For example, the user equipment may receive a segment of text data (the text data is a Chinese text) input by the user, and then initiate a request to the data processing device. Therefore, the data processing device translates the segment of text data into English to obtain an English translated text for the segment of text data, and feeds back the English translated text to the user equipment.

FIG. 3a shows another natural language processing system. In FIG. 3a, user equipment directly serves as a data processing device. The user equipment can directly receive an input from a user, and the input is directly processed by using hardware of the user equipment. A specific process is similar to that in FIG. 2. Refer to the foregoing descriptions. Details are not described herein again.

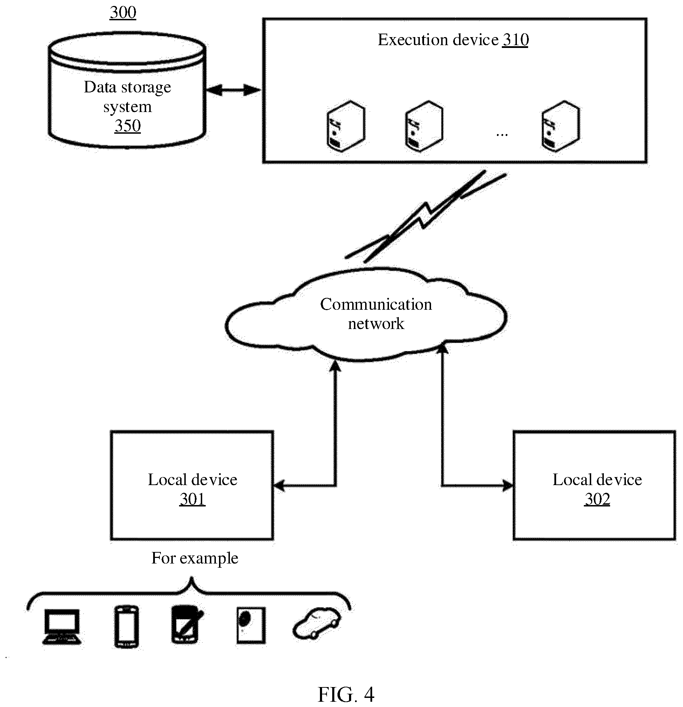

FIG. 4 is a diagram of a device 300 related to natural language processing according to an embodiment of this application.

The user equipment in FIG. 2 and FIG. 3a may be specifically a local device 301 or a local device 302 in FIG. 4. The data processing device in FIG. 2 may be specifically an execution device 310 in FIG. 4. A data storage system 350 may store to-be-processed data of the execution device 310. The data storage system 350 may be integrated on the execution device 310, or may be disposed on a cloud or another network server.

The processor in FIG. 2 and FIG. 3a may perform data training/machine learning/deep learning by using a neural network model or another model, and execute a natural language processing application (for example, natural language generation, text classification, sequence labeling, reading comprehension, text generation, text inference, or translation) on text data by using a final model that is obtained by performing final training or learning with data, to obtain a corresponding processing result.

A high-precision model obtained by performing fine-tuning on a pre-trained language model in embodiments of this application may be deployed in the data processing device. The data processing device may provide the high-precision model to process the text data, to obtain the processing result of the natural language processing application.

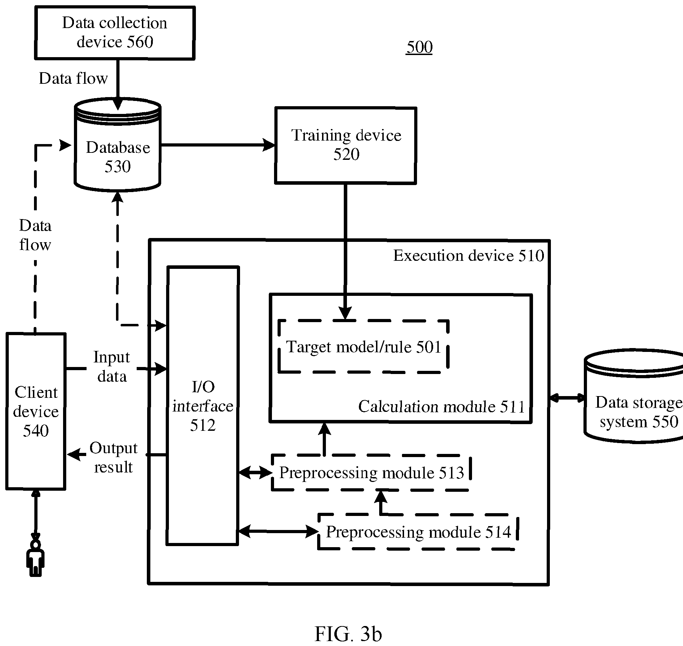

The following describes in detail a system architecture provided in embodiments of this application with reference to FIG. 3b. FIG. 3b is a diagram of a system architecture according to an embodiment of this application. As shown in FIG. 3b, a system architecture 500 includes an execution device 510, a training device 520, a database 530, a client device 540, a data storage system 550, and a data collection system 560.

The execution device 510 includes a calculation module 511, an I/O interface 512, a preprocessing module 513, and a preprocessing module 514. The calculation module 511 may include a target model/rule 501, and the preprocessing module 513 and the preprocessing module 514 are optional.

The data collection device 560 is configured to collect training data.

In a natural language synthesis task, the training data may include text data with a missing text and complete text data corresponding to the text data with the missing text.

In a translation task, the training data may include but is not limited to a parallel corpus, a monolingual corpus, and the like.

The parallel corpus is a bilingual or multilingual corpus (that is, labeled text data) formed by an original text and a translated language text corresponding to the original text in parallel. The original text and the translated language text have same semantics and have a correspondence between text units. For example, the original text is "zhe ci lv xing xu yao ren zhen ji hua", and an English text corresponding to the original text in parallel is "the trip needs careful planning". In this case, "zhe ci lv xing xu yao ren zhen ji hua" and "the trip needs careful planning" may be considered as a group of parallel corpora, and the group of parallel corpora is a Chinese-English parallel language pair. The original text "zhe ci lv xing xu yao ren zhen ji hua" may be considered as a source corpus of the group of parallel corpora, and the translated text "the trip needs careful planning" may be considered as a target corpus of the group of parallel corpora, where "lv xing" may correspond to trip.

In addition, "zhe ci lv xing xu yao ren zhen ji hua" may be considered as a monolingual corpus, and "the trip needs careful planning" may also be considered as a monolingual corpus.

After collecting the training data, the data collection device 560 stores the training data in the database 530, and the training device 520 performs training based on the training data maintained in the database 530 to obtain the target model/rule 501.

The training device 520 trains a pre-trained language model (pre-trained language model, PLM) in embodiments of this application based on the training data maintained in the database 530 to obtain the target model/rule 501.

To adapt to a downstream task, a training device 520 may perform fine-tuning on a trained pre-trained language model based on the training data maintained in the database 530 to obtain the target model/rule 501.

It should be understood that the training device 520 training the pre-trained language model and the training device 520 performing fine-tuning on the trained pre-trained language model may be different devices.

It should be noted that, during actual application, the training data maintained in the database 530 is not necessarily collected by the data collection device 560, but may be received from another device. In addition, it should be noted that the training device 520 may not train the target model/rule 501 completely based on the training data maintained in the database 530, or may obtain the training data from a cloud or another place to perform model training. The foregoing description does not need be used as a limitation on embodiments of this application.

The target model/rule 501 obtained through training by the training device 520 may be applied to different systems or devices, for example, applied to the execution device 510 shown in FIG. 3b. The execution device 510 may be a terminal, for example, a mobile phone terminal, a tablet computer, a notebook computer, an augmented reality (augmented reality, AR)/virtual reality (virtual reality, VR) device, or a vehicle-mounted terminal. Alternatively, the execution device 510 may be a server, a cloud, or the like. In FIG. 3b, the input/output (input/output, I/O) interface 512 is configured for the execution device 510, and is configured to exchange data with an external device. A user may input data to the I/O interface 512 through the client device 540.

The preprocessing module 513 and the preprocessing module 514 are configured to perform preprocessing (for example, a preprocessing process such as obtaining a known data unit and a position of a to-be-predicted data unit in target data, or generating attention information) based on the input data received by the I/O interface 512. It should be understood that there may be no preprocessing module 513 and no preprocessing module 514 or only one preprocessing module. When the preprocessing module 513 and the preprocessing module 514 do not exist, the calculation module 511 may be directly used to process the input data.

When the execution device 510 preprocesses the input data, or when the calculation module 511 of the execution device 510 performs a related processing process such as calculation, the execution device 510 may invoke data, code, and the like in the data storage system 550 for corresponding processing. Alternatively, data, instructions, and the like obtained through corresponding processing may be stored in the data storage system 550.

Finally, the I/O interface 512 presents a processing result to the client device 540, to provide the processing result to the user.

In a case shown in FIG. 3b, the user may manually provide input data, and the "manually providing the input data" may be implemented through an interface provided by the I/O interface 512. In another case, the client device 540 may automatically send the input data to the I/O interface 512. If the client device 540 is required to obtain authorization of the user when automatically sending the input data, the user may set corresponding permission on the client device 540. The user may view, on the client device 540, a result output by the execution device 510. A specific presentation form may be a specific manner such as display, sound, or action. The client device 540 may alternatively serve as a data collection end, collect the input data input to the I/O interface 512 and the output result output from the I/O interface 512 that are shown in the figure as new sample data, and store the new sample data in the database 530. Certainly, collection may alternatively be performed without using the client device 540, but the I/O interface 512 directly stores the input data input to the I/O interface 512 and the output result output from the I/O interface 512 that are shown in the figure in the database 530 as the new sample data.

It should be noted that FIG. 3b is merely a diagram of the system architecture according to this embodiment of this application. Position relationships between devices, components, modules, and the like shown in the figure constitute no limitation. For example, in FIG. 3b, the data storage system 550 is an external memory relative to the execution device 510. In other cases, the data storage system 550 may alternatively be placed in the execution device 510.

It should be understood that the execution device 510 may alternatively be deployed in the client device 540.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses xs (namely, input data) and an intercept of 1 as an input. An output of the operation unit may be as follows:

$$h_{W,b}\left(x\right) = f\left(W^T x\right) = f\left(\sum_{s=1}^{n} W_s x_s + b\right)$$

Herein, s = 1, 2, ..., and n, n is a natural number greater than 1, Ws is a weight of xs, b is a bias of the neuron, and f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network formed by linking a plurality of single neurons together. That is, an output of a neuron may be an input of another neuron. An input of each neuron may be connected to a local receptive field of a previous layer to extract a feature of the local receptive field. The local receptive field may be a region constituted by several neurons.

(2) Transformer layer

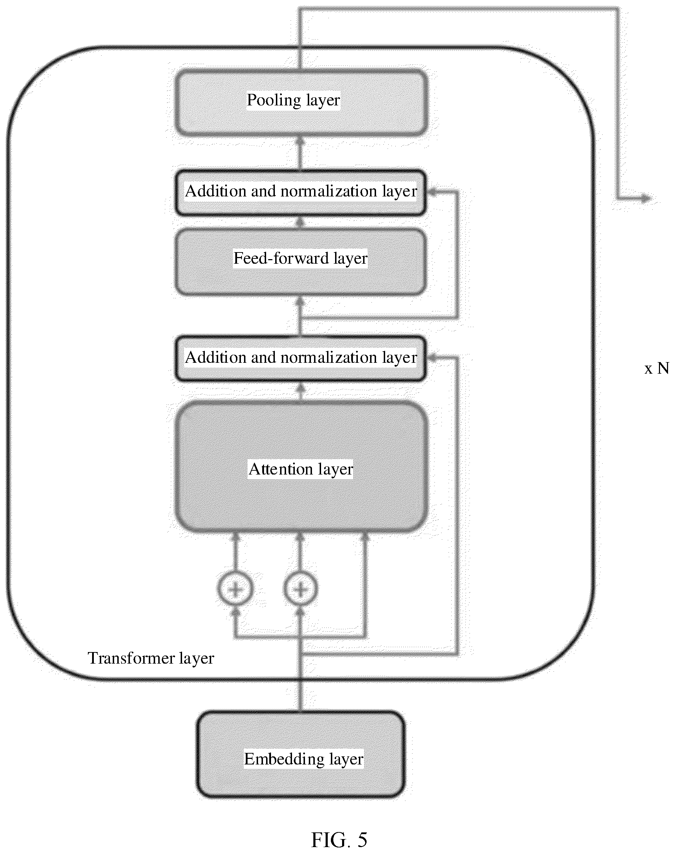

FIG. 5 is a diagram of an architecture of a transformer layer. As shown in FIG. 5, a neural network includes an embedding layer and at least one transformer layer. The at least one transformer layer may be N transformer layers (N is an integer greater than 0). Each transformer layer includes an attention layer, an addition and normalization (add & norm) layer, a feed-forward (feed-forward) layer, and an addition and normalization layer that are sequentially adjacent. At the embedding layer, embedding processing is performed on a current input to obtain a plurality of embedding vectors. At the attention layer, P input vectors are obtained from a previous layer of a first transformer layer. An intermediate vector corresponding to any first input vector is obtained based on an association degree between the first input vector and each input vector within a preset attention window range by using the first input vector in the P input vectors as a center. In this way, P intermediate vectors corresponding to the P input vectors are determined. At a pooling layer, the P intermediate vectors are combined into Q output vectors. A plurality of output vectors obtained from a last transformer layer in transformer layers are used as feature representations of the current input.

(3) Attention mechanism (attention mechanism)

The attention mechanism simulates an internal process of an observational behavior of a creature, is a mechanism that aligns internal experience with external feelings to increase observation precision of some regions, and can quickly select high-value information from a large amount of information by using limited attention resources. The attention mechanism can quickly extract an important feature of sparse data, and therefore is widely used in natural language processing tasks, especially machine translation. A self-attention mechanism (self-attention mechanism) is improvement of the attention mechanism. The self-attention mechanism becomes less dependent on external information and is better at capturing an internal correlation of data or features. An essential idea of the attention mechanism may be rewritten as the following formula:

Herein, Lx = ‖Source‖ represents a length of a source. The formula means that constituent elements in the source are assumed to include a series of data pairs. In this case, an element query in a target (target) is provided, similarity or correlation between the query and each key is calculated to obtain a weight coefficient of a value corresponding to each key, and then weighted summation is performed on values, to obtain a final attention value. Therefore, in essence, the attention mechanism is to perform weighted summation on values (values) of the elements in the source, and a query and a key are used to calculate a weight coefficient of a corresponding value. Conceptually, attention may be understood as selecting a small amount of important information from a large amount of information, focusing on the important information, and ignoring most of unimportant information. A process of focusing is reflected in calculation of the weight coefficient. A greater weight indicates that a value (value) corresponding to the weight is more focused, that is, the weight indicates importance of information, and the value is the information corresponding to the weight. The self-attention mechanism may be understood as an intra-attention (intra-attention) mechanism. The attention mechanism occurs between the element query in the target and all the elements in the source. The self-attention mechanism is an attention mechanism that occurs between elements in a source or between elements in a target, and may also be understood as an attention calculation mechanism in a special case of target = source. A specific calculation process of the self-attention mechanism is the same except that a calculation object changes.

(4) Natural language processing (natural language processing, NLP)

A natural language (natural language) is a human language, and natural language processing (NLP) is processing of the human language. Natural language processing is a process of systematic analysis, understanding, and information extraction of text data in an intelligent and efficient manner. By using NLP and components of NLP, massive chunks of text data can be managed, or a large quantity of automated tasks can be executed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

(5) Pre-trained language model (pre-trained language model)

The pre-trained language model is a natural language sequence encoder, and encodes each word in a natural language sequence into a vector representation to perform a prediction task. Training for the pre-trained language model includes two stages. At a pre-training (pre-training) stage, the model is trained for a language model task on a large scale of unsupervised texts to learn a word representation. At a fine-tuning (fine-tuning) stage, the model is initialized by using parameters learned at the pre-training stage, and is trained in few steps on downstream tasks (downstream tasks) such as text classification (text classification) and sequence labeling (sequence labeling), so that semantic information obtained through pre-training can be successfully migrated to the downstream tasks.

(6) Sequence-to-sequence natural language generation

Sequence-to-sequence natural language generation is a very important direction in natural language processing tasks, and an encoder-decoder design framework is often used. A training instance (X, Y) is given, where X is a sentence of a source sequence, and Y is a target sequence. In a training process, X is input to an encoder and a group of vector representations z are generated. Then, the representations z are input to a decoder through a cross-attention module, and the target sequence Y is generated through decoding at a decoder side. Sequence generation tasks may be classified into autoregressive generation and non-autoregressive (parallel) generation based on different target sequence generation modes. Autoregressive generation means that in a process of generating a target sequence, a first character of the generated target sequence is first predicted, and then the entire target sequence is predicted step by step based on generated subsequences. Non-autoregressive generation means that a complete target sequence is generated in parallel during decoding, and no step-by-step iteration process is required, thereby greatly reducing waiting time for generating the target sequence. Non-autoregressive generation becomes increasingly important for tasks that have high requirements for real-time performance, such as translation and dialogues. The following separately describes the two generation modes.

(7) Autoregressive generation policy

Autoregressive generation refers to predicting a target sequence word by word in a generation process, and is currently the most commonly used and best sequence generation policy. This autoregressive generation mode is generally used for common tasks such as machine translation and digest generation. When the target sequence is predicted, the autoregressive generation policy enables a model to view only content generated before a time step, and not to view information generated at the current time step and a subsequent time step. For example, in an English-German translation task, a source language sentence (English): "who are you" is given, and the machine translation model needs to generate a corresponding target sequence: "Wer bist du". An autoregressive machine translation model predicts and outputs a first character "Wer" based on a source sequence at a first time step, inputs the character ("Wer") generated at the previous step to a decoder at a second time step, and predicts an output "bist" at a next time step. As shown in FIG. 1, when a model generates "bist" (displayed in a black box), only preceding text information "<s> Wer" can be viewed. "<s>" indicates a start symbol, and "[M]" indicates that a character at a corresponding position is masked and cannot be viewed. The foregoing process is repeated step by step until a complete target sequence (German: "Wer bist du </s>") is generated through decoding, where "</s>" is a sentence end identifier, and indicates that the model no longer generates new content. It can be learned from this example that, for prediction at each time step, an output at a previous time step is used as an input, and the complete target sequence is generated through K iterations, where K is a length of the target sequence, and K = 4 herein. To complete the autoregressive generation policy, a decoder uses a self-attention mask matrix to generate the character "[M]", to ensure that the model can view only the preceding text information during prediction at a current time step and cannot view following text information.

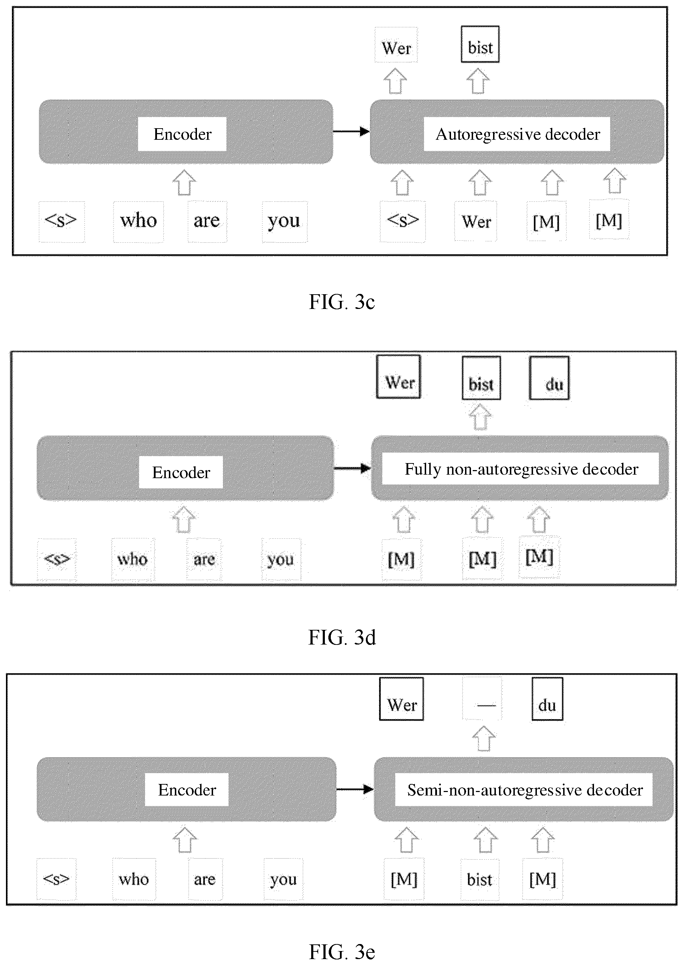

A generation mode in FIG. 3c is a most common left-to-right sequence generation policy. In an actual use process, a right-to-left generation policy may also be used. For example, the right-to-left generation policy is often used for lyric translation and poetry translation. A model preferentially generates a last character in a sequence, and then generates characters one by one from back to front until a first character is output. In this way, effect of rhyme and smoothness can be achieved. Right-to-left generation may also be understood as generation in a reverse sequence. In this case, the model can view only the following text information, but cannot view the preceding text information.

(8) Fully non-autoregressive generation policy

Fully non-autoregressive generation is also referred to as parallel generation (which may be referred to as non-autoregressive generation for short in embodiments of this application), and means that a process of generating a target sequence is parallel. In this generation policy, the complete target sequence can be obtained through one time of decoding, and word-by-word prediction is not required. When the target sequence is predicted, neither preceding text information nor following text information needs to be viewed during non-autoregressive generation, and only one time of decoding needs to be performed at a decoder side based on a source sentence sequence, that is, an output at an encoder side, to obtain the target sequence. This means that compared with autoregressive generation, non-autoregressive generation can greatly reduce a decoding delay, and therefore gradually becomes an important research direction of a sequence generation task. As shown in FIG. 3d, a model may directly decode a source sequence sentence "who are you" to obtain a target sequence "Wer bist du" (in black boxes, where "[M]" indicates that a character at a corresponding position is masked). This generation is also referred to as fully non-autoregressive generation.

Although non-autoregressive sequence generation is faster than the autoregressive policy, quality of non-autoregressive sequence generation is poor than the autoregressive generation policy because no preceding text information and following text information can be viewed in a training process. To improve quality of the target sequence generated through non-autoregression, a part of preceding text information and following text information is usually randomly reserved during training, so that a decoder can supplement the complete target sequence based on the part of known information. During testing, a fixed quantity of iterations are used to achieve effect close to that of autoregression. As shown in FIG. 3e, at a current time step, a model predicts a first character and a last character (that are in black boxes) based on known information "bist". When predicting the first character "Wer", the model needs to view following text information "bist". When predicting the last character, the model needs to view preceding text information "bist". Therefore, at the current time step, a non-autoregressive decoder needs to view both preceding text information and following text information. This generation is also referred to as semi-non-autoregressive generation.

(9) Neural machine translation (neural machine translation, NMT) model

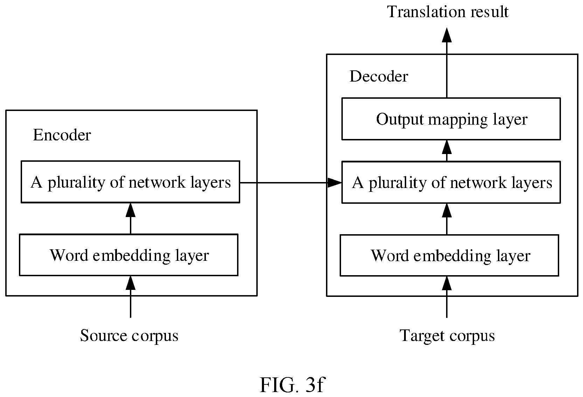

FIG. 3f shows a mainstream NMT architecture: transformer framework. The transformer framework is used as an example to describe a workflow of the NMT model. The transformer framework mainly includes an encoder and a decoder. Each of the encoder and the decoder includes a plurality of layers, and each layer of the encoder/decoder includes some encoding units/decoding units. At each layer of the encoder, a series of neural network transformations are performed on word vectors (or referred to as word embedding vectors) corresponding to a source statement, and then transformed word vectors are represented as a high-dimensional vector (or referred to as a hidden state (hidden state)). Each layer of the decoder is responsible for re-decoding (translating) the high-dimensional vector into a target language.

The word vectors corresponding to the source statement may be obtained by using word vector parameters of the encoder, and a set of the word vector parameters of the encoder may be considered as a parameter matrix. Possible words in a source language may be included by using a vocabulary. The word vector parameter matrix of the encoder includes a word vector of each word in the vocabulary. A dimension of the word vector parameter matrix may be [word vector dimension, vocabulary size], where the vocabulary size is a quantity of words included in the vocabulary. In some scenarios, a word in the source statement input to the NMT model may not exist in the vocabulary, and such a word may be represented by using a fixed word vector. Each layer of the encoder may include a self-attention (self-attention) layer and a feed-forward (feed-forward) network layer. The self-attention layer of the encoder is used to consider a weight (impact of each word on a currently encoded word vector) of a word vector in the source statement when each word vector is encoded. The feed-forward network layer of the encoder is used to perform nonlinear transformation on an output vector of the self-attention layer. It may be considered that the self-attention layer of the encoder considers, by using a parameter included in the self-attention layer, the weight (the impact of each word on the currently encoded word vector) of the word vector of each word in the source statement. The feed-forward network layer of the encoder performs nonlinear transformation on the output vector of the self-attention layer by using a parameter included in the feed-forward network layer.

Each layer of the decoder includes a self-attention (self-attention) layer, an encoder-decoder attention (encoder-decoder attention) layer, and a feed-forward (feed-forward) network layer. In a decoding process, the self-attention layer of the decoder considers impact of a generated new word on a currently decoded vector. The encoder-decoder attention layer of the decoder considers impact of an input of the encoder on the currently decoded vector. The feed-forward network

13

layer of the decoder is used to perform non-linear transformation on an output vector of the encoder-decoder attention layer. At an output mapping layer, a decoded vector output by a last network layer of the decoder is received, and the decoded vector is converted into a translation result, for example, a new word is generated. Specifically, after the generated new word is processed by using a word vector parameter matrix of the decoder, a word vector of the generated new word is obtained. The word vector of the generated new word is used as an input of a first network layer of the decoder. This process continues until an end symbol is generated or another preset stop condition is met. All target words generated at a decoding stage are translation results. Possible words in a target language may be included by using a vocabulary. The word vector parameter matrix of the decoder includes a word vector of each word in the vocabulary. A dimension of the word vector parameter matrix may be [word vector dimension, vocabulary size], where the vocabulary size is a quantity of words included in the vocabulary. A word vector closest to the decoded vector output by the last network layer may be obtained based on a minimum distance in distances between the decoded vector output by the last network layer and all word vectors included in the word vector parameter matrix of the decoder. A translation result is obtained based on the closest word vector and the vocabulary.

It should be understood that the foregoing architecture may be further applicable to another natural language processing task, for example, natural language synthesis, semantic understanding, or digest generation.

In a sequence generation task, "pre-training-fine-tuning" is a standard paradigm for improving model performance. However, for a sequence-to-sequence generation task, an existing pre-training solution focuses only on left-to-right autoregressive generation, in other words, only preceding text information of a data sequence can be viewed in a pre-training process. Therefore, when a downstream task is fine-tuned, another decoding policy cannot be extended. With launch of large pre-trained models such as a generative pre-trained transformer 3 (generative pre-trained transformer 3, GPT-3) and Pangu, parameters of the models become increasingly large, and pre-training costs become increasingly high. If one time of pre-training can adapt to only a single downstream task, one time of pre-training needs to be performed for each type of generation policy at high costs, which consumes excessive resources.

An embodiment of this application proposes a sequence-to-sequence model pre-training method, to enable a model to adapt to three different types of sequence generation tasks (an autoregressive task, a non-autoregressive task, and a semi-non-autoregressive task) after only one time of pre-training, thereby greatly reducing pre-training costs while ensuring quality.

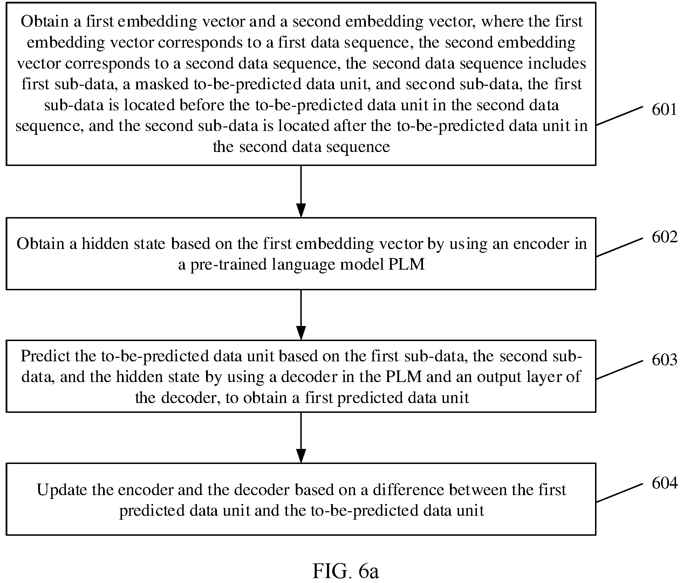

FIG. 6a is a diagram of an embodiment of a model training method according to an embodiment of this application. The model training method provided in this embodiment of this application may be applied to the training device described above. Specifically, the model training method may be applied to a terminal device such as a mobile phone, a tablet computer, a notebook computer, or an intelligent wearable device, or may be applied to a server on a cloud side. As shown in FIG. 6a, the model training method provided in this embodiment of this application includes the following steps.

601: Obtain a first embedding vector and a second embedding vector, where the first embedding vector corresponds to a first data sequence, the second embedding vector corresponds to a second data sequence, the second data sequence includes first sub-data, a masked to-be-predicted data unit, and second sub-data, the first sub-data is located before the to-be-predicted data unit in the second data sequence, and the second sub-data is located after the to-be-predicted data unit in the second data sequence.

In a possible implementation, a training sample for a PLM may be obtained, where the training sample may include the first data sequence and the second data sequence. The first data sequence may be obtained based on a source corpus, and the second data sequence may be obtained based on a target corpus. The PLM needs to predict and generate the target corpus based on the source corpus.

In a possible implementation, the PLM may be used to implement a sequence conversion task between different language types. For example, the sequence conversion task may be a text translation task or a digest generation task between different languages. The first data sequence and the second data sequence may be texts including different language types (each data unit in the first data sequence and each data unit in the second data sequence are not limited to being of different language types, for example, a part of data units in the first data sequence and data units (a part or all of the data units) in the second data sequence are of a same language type). The language type may also be referred to as a language.

For example, in a Chinese-English translation task, an original text is "zhe ci lv xing xu yao ren zhen ji hua", and an English text corresponding to the original text in parallel is "the trip needs careful planning". In this case, "zhe ci lv xing xu yao ren zhen ji hua" and "the trip needs careful planning" may be considered as a group of parallel corpora, and the group of parallel corpora is a Chinese-English parallel language pair. The original text "zhe ci lv xing xu yao ren zhen ji hua" may be considered as a source corpus of the group of parallel corpora, and the translated text "the trip needs careful planning" may be considered as a target corpus of the group of parallel corpora.

For example, in an English-German translation task, an original text is "We danse on the grass", and a German text corresponding to the original text in parallel is "Wir tanzen auf dem gras". In this case, "We danse on the grass" and "Wir tanzen auf dem gras" may be considered as a group of parallel corpora, and the group of parallel corpora is an English-German parallel language pair. The original text "We danse on the grass" may be considered as a source corpus of the group of parallel corpora, and the translated text "Wir tanzen auf dem gras" may be considered as a target corpus of the group of parallel corpora.

In a possible implementation, the first data sequence on which a masking operation is not performed and the second data sequence on which a masking operation is not performed are different data sequences on which sample labeling is performed.

In a possible implementation, the PLM may be used to implement a digest generation task of a text. In this case, the source corpus may be a source corpus from which a digest needs to be extracted, and the target corpus may be a digest text that needs to be generated.

In a possible implementation, the PLM may be used to implement a text reply task. In this case, the source corpus may be a source corpus that needs to be replied, and the target corpus may be reply content for the source corpus.

In a possible implementation, that the first data sequence on which the masking operation is not performed and the second data sequence on which the masking operation is not performed are a same data sequence means that the first data sequence on which the masking operation is not performed and the second data sequence on which the masking operation is not performed are unlabeled data.

In a possible implementation, the first data sequence may be obtained by masking an original source corpus, and the second data sequence may be obtained by masking an original target corpus. When the PLM may be used to implement a sequence conversion task (for example, a translation task) between texts of different language types, the original source corpus and the original target corpus may be texts expressed by using different language types.

Optionally, the original source corpus and the original target corpus may be obtained from an external database.

In a possible implementation, when the PLM may be used to implement the sequence conversion task (for example, the translation task) between the texts of different language types, a data unit in the original source corpus may be aligned with a data unit in the original target corpus. Each of the original source corpus (which may also be referred to as X for short in this embodiment, for example, a second initial data sequence and a third initial data sequence in this embodiment of this application) and the original target corpus (which may also be referred to as Y for short in this embodiment, for example, a first initial data sequence and a fourth initial data sequence in this embodiment of this application) may include at least one data unit (for example, a subunit or a word unit). The data units are aligned, so that there may be a one-to-one correspondence between the data unit in the original source corpus and the data unit in the original target corpus, and the data units having the correspondence may express same semantics.

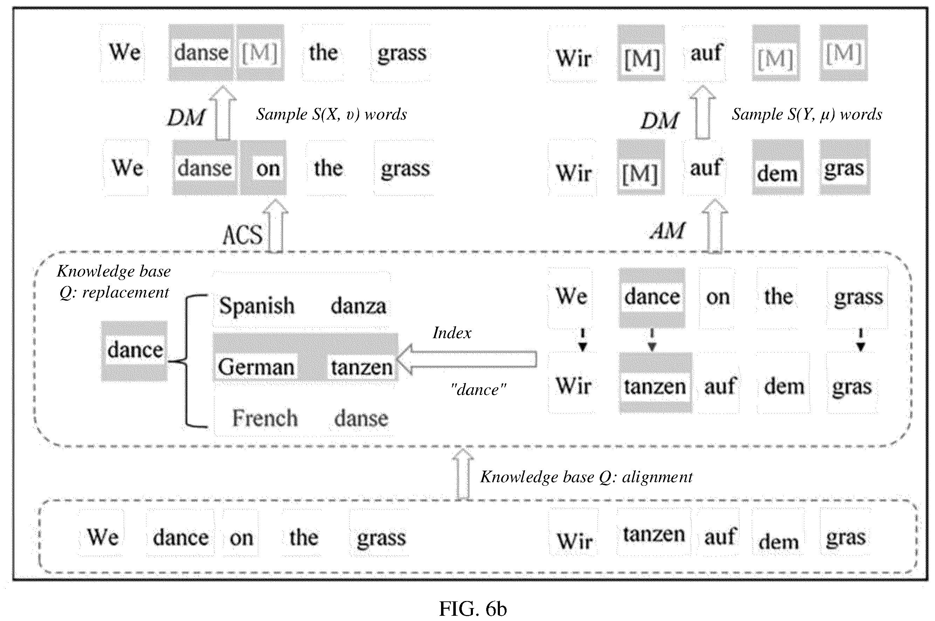

For example, an English-German translation task in FIG. 6b is used as an example. An input sentence pair includes two languages ("We danse on the grass" and "Wir tanzen auf dem gras"). "We danse on the grass" may be an original source corpus, and "Wir tanzen auf dem gras" may be an original target corpus. First, a set of all aligned knowledge in a sentence pair (X, Y) is extracted based on external knowledge (for example, by using a knowledge base Q: alignment shown in FIG. 6b). Each element constitutes a group of alignment mapping relationships (for example, {"We-Wir", "dance-tanzen", "grass-gras"} marked by arrows in FIG. 6b).

In a possible implementation, the foregoing data units may be aligned based on the external knowledge (for example, by using the knowledge base Q: alignment shown in FIG. 6b). A data alignment knowledge base varies with an actual task language pair (X, Y). In form, the knowledge base may be a dictionary, or a third-party tool (for example, fast-align), or may be a pre-trained multilingual word vector, or the like. This is not limited herein.

In a possible implementation, masking operations may be respectively performed on the original source corpus and the original target corpus, to obtain training data (for example, the first data sequence and the second data sequence in embodiments of this application) of the PLM.

In a possible implementation, the second initial data sequence (the original source corpus) may be obtained. In addition, whether at least one data unit in the first initial data sequence is masked is determined in a probability sampling manner, to obtain the second data sequence. A probability value obtained through probability sampling is used as a probability that the at least one data unit is masked.

The following describes a diagram of the probability sampling manner in embodiments of this application.

In a possible implementation, a mask probability may be dynamically sampled, where "dynamically" means that a probability that each data unit in a data sequence is masked is dynamic.

In a possible implementation, a probability value may be obtained by sampling each data unit in at least one data unit (for example, the at least one data unit may be all data units in the second initial data sequence) in the second initial data sequence in a probability interval, and the probability value obtained through probability sampling is used as the probability that the at least one data unit is masked. For example, the probability value may be compared with another probability value obtained through sampling in another probability interval, to determine whether to perform a masking operation on the data unit.

For example, a probability interval W may be set to [0.1, 0.2], and a probability value $\upsilon$ is randomly sampled from the interval W when a masking operation is performed on each data unit in the second initial data sequence. The masking operation is performed on each data unit in the second initial data sequence based on the probability $\upsilon$, to be specific, a random number r is randomly generated from an interval [0, 1]. If r is less than $\upsilon$, it indicates that a current data unit may be masked; otherwise, no operation is performed on the current data unit.

Similarly, the first initial data sequence (the original target corpus) may be obtained. In addition, whether the at least one data unit in the first initial data sequence is masked is determined in the probability sampling manner, to obtain the second data sequence. The probability value obtained through probability sampling is used as the probability that the at least one data unit is masked.

For example, a probability interval R may be set to [0.35, 0.55], and a probability value $\mu$ is sampled from the interval R when a masking operation is performed on each data unit in the first initial data sequence. The masking operation is performed on each data unit in the first initial data sequence based on the probability $\mu$, to be specific, a random number a is randomly generated from an interval [0, 1]. If a is less than $\mu$, it indicates that a current data unit may be masked; otherwise, no operation is performed on the current data unit.

An embedding vector generated based on the first data sequence may be used as an input of the encoder in the PLM, and an embedding vector generated based on the second data sequence may be used as an input of the decoder in the PLM. The foregoing masking operations respectively performed on the first data sequence and the second data sequence may be referred to as dynamic dual masking operations. The input of the encoder and the input of the decoder may be separately masked through the dynamic dual masking operations, and pre-training of the encoder and the decoder may be completed at the same time in a subsequent training process. In addition, dynamically sampling the mask probability can avoid an excessively high mask probability, to avoid a small amount of valid information in an entire batch during model training.

In a possible implementation, when the probability sampling is performed, a probability that a data unit in the first initial data sequence is masked is greater than a probability that a data unit in the second initial data sequence is masked. A dynamic masking operation is set to ensure that a mask proportion of the decoder is higher than that of the encoder, so that the decoder can fully obtain information from the encoder side during prediction, thereby improving model precision of a trained pre-trained model.

The foregoing probability intervals are used as examples. The two consecutive intervals W and R are respectively set for the encoder and the decoder, and it is ensured that a minimum value in the interval R is greater than a maximum value in the interval W (which can further ensure that during the probability sampling, the probability that the data unit in the first initial data sequence is masked is greater than the probability that the data unit in the second initial data sequence is masked). For example, W is set to [0.1, 0.2], and R is set to [0.35, 0.55].

For example, an input and an output (DM(ACS(X)), PRE2(X)) at an encoder side may be obtained through dynamic random masking, where DM (dynamic masking) indicates a dynamic masking result ("We danse [M] the grass") of the second initial data sequence ACS(X); and PRE2(X) is a predicted generation target of the encoder, and is a set of all masked characters ("__ __ on __ __") herein. Similarly, at a decoder side, the masking operation is performed on each data unit in the first initial data sequence AM(Y) based on the probability $\mu$, to obtain an input and an output (DM(AM(Y)), PRE2(Y)) at the decoder side (a masking result represented in FIG. 6b is "Wir [M] auf [M] [M]"), where PRE2(Y) indicates that masked characters (_ tanzen _ dem gras) are increased on a basis of PRE1(Y) by using a current operation. New inputs and new outputs, namely, (DM(ACS(X)), DM(AM(Y))) and (PRE2(X), PRE2(Y)) may be obtained by using the operation at the current step, as shown in FIG. 6b.

In a possible implementation, the PLM may be used to implement the sequence conversion task (for example, the translation task) between the texts of different language types. A part of data units in the original source corpus (for example, the third initial data sequence in this embodiment of this application) may be replaced (replaced with data units having same semantics and expressed by using another language type), so that precision of sequence conversion between a plurality of languages by the PLM can be improved.

In a possible implementation, the third initial data sequence may be obtained, where the second data sequence and the third initial data sequence are texts having same semantics and expressed by using different language types, and a first data unit in the third initial data sequence and the to-be-predicted data unit have same semantics; and the first data unit in the third initial data sequence is replaced with a second data unit, to obtain the first data sequence, where the second data unit and the first data unit have same semantics, and are expressed by using different language types.

Same semantics herein may be understood as expressing same or similar semantics. Because syntax and language environments of different language types are not limited, same semantics in this embodiment of this application is not limited to completely consistent semantics.

In addition to replacing the first data unit in the third initial data sequence with the second data unit, other processing (for example, a masking operation or an operation of another data unit) may be further performed on the third initial data sequence. In this embodiment of this application, obtaining the first data sequence only by replacing the first data unit in the third initial data sequence with the second data unit is not limited.

In a possible implementation, the first data unit may be randomly selected from the third initial data sequence. For example, any data unit in the third initial data sequence may be selected as the first data unit. A data unit whose semantics is the same as or similar to that of the first data unit and that is expressed by using a different language type may be retrieved from a language library as the second data unit, and the first data unit in the third initial data sequence is replaced with the second data unit, to obtain the first data sequence.

In a possible implementation, the second data unit and the first initial data sequence are also expressed by using different language types, that is, language types of any two of the first initial data sequence, the second initial data sequence, and the second data unit are different.

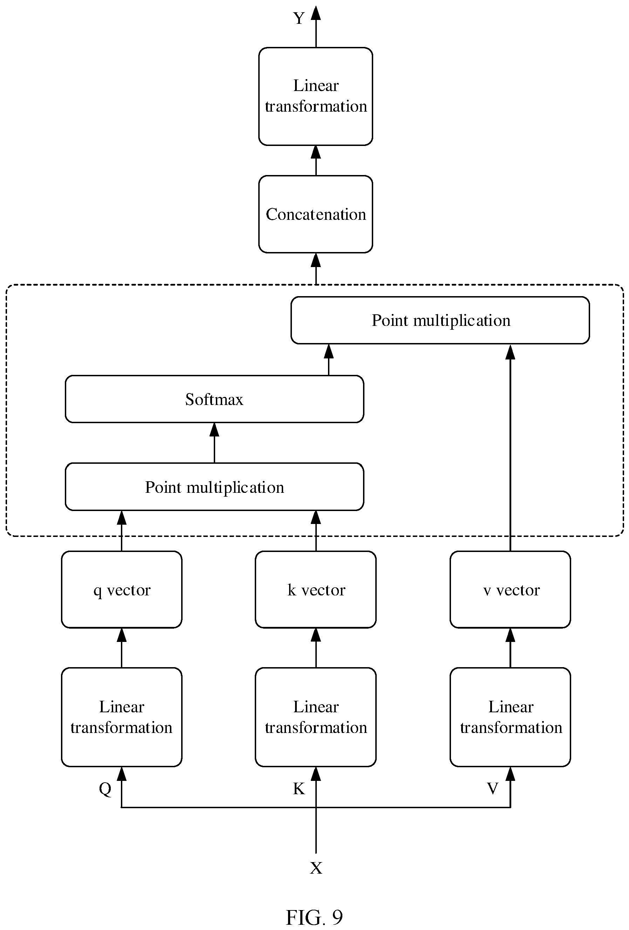

For example, a data unit, for example, "dance" in FIG. 6b, may be selected from a data unit set of the third initial data sequence at a specific probability, content that matches the element is searched for in a source sequence X, and a matching result is indexed in a multilingual dictionary of the knowledge base Q (index "dance" in FIG. 9). A language is randomly selected from a set of all available languages (Spanish, German, and French), and then a character corresponding to the language is obtained. A meaning of the character needs be similar to that of the matching result (for example, "danse" in French). Finally, the word ("danse") obtained based on the index is used to replace the matching result ("dance") to obtain a group of new inputs (ACS(X), PRE1(X)), where ACS (Aligned Code-switching) indicates an aligned code-switching operation. A replaced new sentence is a word sequence ("we danse on the grass") including a plurality of languages.

In a possible implementation, after a first data unit in the second initial data sequence is replaced with a second data unit, a masking operation may be performed on a data unit that has same semantics as the first data unit and that is in the first initial data unit. Because the data unit obtained after the masking operation needs to be predicted in a training process of the PLM, the PLM may have a text understanding capability of a richer language type.

In a possible implementation, the fourth initial data sequence may be obtained; and a data unit (for example, the data unit may be the to-be-predicted data unit in this embodiment of this application) that has the same semantics as the first data unit and that is in the fourth initial data sequence is masked, to obtain the second data sequence. In the foregoing manner, external knowledge is introduced to combine code-switching with a masking operation, so that a semantic representation capability of the model is more fully trained.

For example, the English-German translation task in FIG. 6b is used as an example. The input sentence pair is two languages ("We danse on the grass" and "Wir tanzen auf dem gras"). First, the set of all the aligned knowledge in the sentence pair (X, Y) is extracted based on the external knowledge (the knowledge base Q: alignment). Each element constitutes a group of alignment mapping relationships ({"We-Wir", "dance-tanzen", "grass-gras"} marked by the arrows in FIG. 6b). Then, a subset (for example, {"dance-tanzen"}) is selected from the set at a specific probability, and the following operations are performed on each element in the subset:

Encoder side: The source sequence X is searched for content that matches the element, and a matching result is indexed in the multilingual dictionary of the knowledge base Q (index "dance" in FIG. 6b). A language is randomly selected from a set of all available languages (Spanish, German, and French), and then a character corresponding to the language is obtained. A meaning of the character needs be similar to that of a matching result (for example, "danse" in French). Finally, the word ("danse") obtained based on the index is used to replace the matching result ("dance") to obtain a group of new inputs (ACS(X), PRE1(X)), where ACS (Aligned Code-switching) indicates an aligned code-switching operation. A replaced new sentence is a word sequence ("we danse on the grass") including a plurality of languages. PRE1(X) indicates a to-be-predicted generation target at the encoder side. Because there is no masked character at the encoder side by using an operation at this step, PRE1(X) = NULL.

Decoder side: A target sequence Y is searched for content that matches the element, a masking operation is performed on a matched character, and then masked content is predicted at an output end. Finally, a group of new inputs (AM(Y), PRE1(Y)) are obtained, where AM(Y) (code-switching masking) indicates a new sequence ("Wir [M] auf dem gras") obtained by performing an aligned masking operation on an initial target Y; [M] indicates that a corresponding character is masked; and PRE1(Y) indicates predicted content at the output end of the decoder, and represents a set of masked words (" __ tanzen __ __ __ ").

A new input sequence (ACS(X), AM(Y)) and a new output sequence (PRE1(X), PRE1(Y)) are obtained by combining code-switching based on external aligned knowledge and a masking operation.

In a possible implementation, after the first data sequence and the second data sequence are obtained, embedding processing may be performed on the first data sequence and the second data sequence respectively by using an embedding layer at the encoder side and an embedding layer at the decoder side, to separately obtain the first embedding vector and the second embedding vector.

For the first embedded vector of the first data sequence, the first embedded vector may include position information of a masked data unit in the first data sequence, and position information and semantic information of an unmasked data unit in the first data sequence. The position information may indicate a position relationship between the data unit and another data unit. For example, the position information may be indicated by using a position vector. The semantic information may be indicated by using a word vector of the data unit.

In a possible implementation, the second data sequence may include masked to-be-predicted data, first sub-data located before the to-be-predicted data, and second sub-data located after the to-be-predicted data.

In a possible implementation, the first sub-data or the second sub-data may include an unmasked data unit, and the second embedding vector includes semantic information of the unmasked data unit and a position relationship between the unmasked data unit and another data unit in the second data sequence.

For example, the first sub-data may include an unmasked data unit, and the second embedding vector may include semantic information of the unmasked data unit in the first sub-data and a position relationship between the unmasked data unit and the another data unit in the second data sequence.

For example, the second sub-data may include an unmasked data unit, and the second embedding vector may include semantic information of the unmasked data unit in the second sub-data and a position relationship between the unmasked data unit and the another data unit in the second data sequence.

In a possible implementation, the first sub-data or the second sub-data includes a masked data unit, and the second embedding vector includes a position relationship between the masked data unit and another data unit in the second data sequence.

For example, the first sub-data may include a masked data unit, and the second embedding vector may include a position relationship between the masked data unit in the first sub-data and the another data unit in the second data sequence.

For example, the second sub-data may include a masked data unit, and the second embedding vector may include a position relationship between the masked data unit in the second sub-data and the another data unit in the second data sequence.

In a possible implementation, the second embedding vector includes a position relationship between the to-be-predicted data unit and the another data unit in the second data sequence.

For example, the second data sequence may be "Wir [M2] auf [M4] [M5]", where [M] means being masked. When the to-be-predicted data unit is [M2], the first sub-data may be Wir, and the second sub-data may be auf [M4] [M5].

The following describes a diagram of generating an embedding vector based on a data sequence.

In a possible implementation, embedding processing may be performed on an unmasked data unit in the data sequence by using an embedding layer. The embedding layer may be referred to as an input embedding (input embedding) layer. A current input may include unmasked data units. At the embedding layer, after the current input is obtained, embedding processing may be performed on each unmasked data unit in the current input, to obtain an embedding vector corresponding to each unmasked data unit.

In some embodiments, a position vector of each data unit in the unmasked data units may be further obtained, where the position vector indicates a position of each data unit in the data sequence. Specifically, the position vector may indicate a relative position relationship between each data unit in the unmasked data units and a masked data unit, and a relative position relationship between each data unit in the unmasked data units and another masked data unit.

In a possible implementation, the embedding layer may include an input embedding layer and a positional encoding (positional encoding) layer. At the input embedding layer, word embedding processing may be performed on each data unit in unmasked data units in a current input, to obtain a word vector (for example, may indicate semantic information) of each data unit in the unmasked data units. At the positional encoding layer, a position, in the current input, of each data unit in the unmasked data units may be obtained, to generate a position vector for the position of each data unit in the unmasked data units.

In some examples, information about the position of each data unit in the unmasked data units in the data sequence may be an absolute position of each data unit in the unmasked data units in the data sequence. For example, the current input is "what date should the Ant Credit Pay be paid back". Herein, a position of "what" may be represented as a first position, a position of "date" may be represented as a second position, and the like. In some examples, the position of each data unit in the unmasked data units in the data sequence may be a relative position of each data unit in the unmasked data units in the data sequence. Still in the example in which the current input is "what date should the Ant Credit Pay be paid back", the position of "what" may be represented as before "date", and the position of "date" may be represented as after "what" and before "should", and the like. When the word vector and the position vector of each data unit in the unmasked data units in the current input are obtained, the position vector of each data unit in the unmasked data units and the corresponding word vector may be fused, to obtain the embedding vector of each data unit in the unmasked data units. It should be understood that a fusion manner may be performing an addition operation on the position vector and the corresponding word vector, or performing another operation. A specific fusion manner is not limited herein. The embedding vector may be represented as an embedding matrix having a preset dimension. It may be set that a quantity of embedding vectors is M, and the preset dimension is H dimensions. In this case, the embedding vector may be represented as an M×H embedding matrix.

602: Obtain a hidden state based on the first embedding vector by using the encoder in the pre-trained language model PLM.

In a possible implementation, in the process of training the PLM, the first embedding vector may be input to the encoder of the PLM, and the second embedding vector may be input to the decoder of the PLM.

In a possible implementation, the hidden state (hidden state) may be obtained based on the first embedding vector by using the encoder in the pre-trained language model PLM. For example, the first embedding vector may be used as an input of the encoder in the pre-trained language model PLM. Further, the encoder in the PLM may output the hidden state.

The following first describes a diagram of a structure of the encoder in the PLM according to an embodiment of this application.

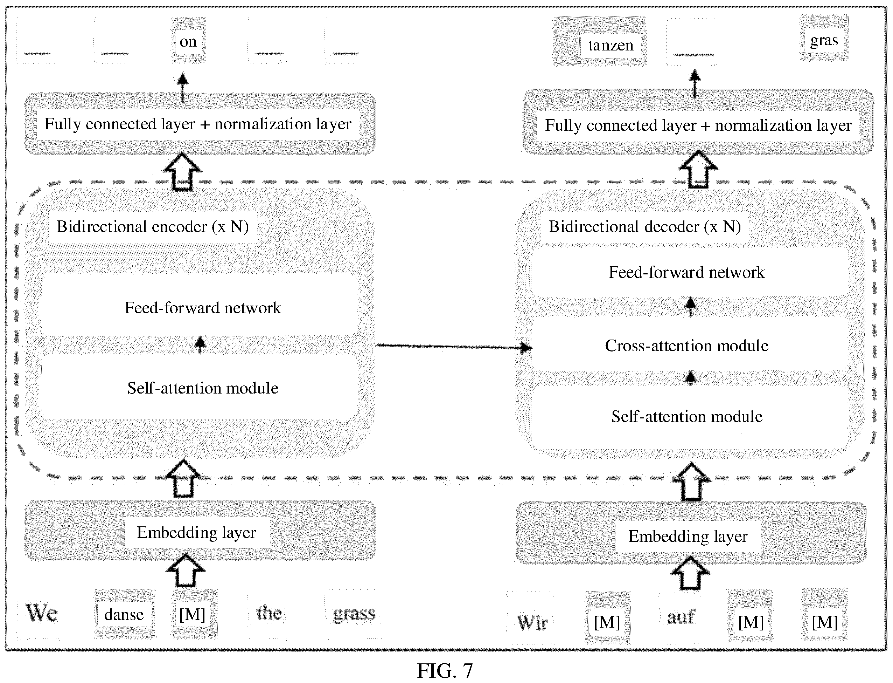

FIG. 7 is a diagram of a structure of a PLM according to an embodiment of this application. The framework may include a bidirectional encoder and a bidirectional decoder.

The encoder may include a self-attention module and a feed-forward network. An output of the encoder may be input to an output layer and a cross-attention module at a decoder side.

An input of the apparatus shown in FIG. 7 may be a sequence obtained through processing in FIG. 6b. The first embedding vector is first input to the encoder of the model, and then a vector representation output by the encoder is input to the decoder through the cross-attention module.

In a possible implementation, the encoder may include a transformer (transformer) layer, where the transformer layer may include a plurality of serial transformer sub-layers. Data output by a previous transformer sub-layer adjacent to each of the transformer sub-layers may be processed by using the transformer sub-layer, to obtain an intermediate vector. The intermediate vector is output to a next transformer sub-layer adjacent to the transformer sub-layer. If the transformer sub-layer is a transformer layer closest to an input side in the plurality of transformer sub-layers, input data of the transformer sub-layer is an embedding vector. If the transformer sub-layer is a transformer layer closest to an output side in the plurality of transformer sub-layers, output data of the transformer sub-layer is a hidden state.

A core feature of the transformer layer is a unique attention mechanism used by the transformer layer. When a natural language, for example, a sentence, is processed, a transformer model uses the attention mechanism to assign different attention coefficients to embedding vectors of various words in the sentence, to more comprehensively consider impact of a context of the sentence on the words. Specifically, the transformer layer may include a multi-head attention layer, an addition and normalization (add & norm) layer, a feed-forward (feed-forward) layer, and an addition and normalization layer that are sequentially adjacent. The attention layer is connected to the embedding layer. Embedding vectors are obtained from the embedding layer as input vectors. The embedding vectors are synthesized based on association degrees between the embedding vectors to obtain an output vector. The output vector is output to a subsequent transformer layer. At the transformer layer, an output of a previous layer is obtained as an input vector, and an operation similar to that of a previous level of transformer layer is performed.

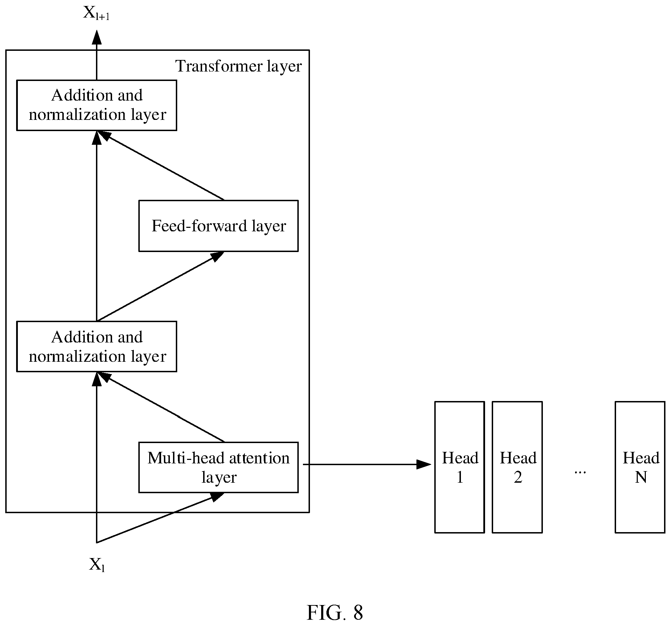

FIG. 8 is a diagram of a structure of a transformer layer. For each transformer sub-layer in embodiments of this application, refer to the structure shown in FIG. 8. As shown in FIG. 8, the transformer layer includes a multi-head attention layer, an addition and normalization (add & norm) layer, a feed-forward (feed-forward) layer, and an addition and normalization layer that are sequentially adjacent.

The multi-head attention layer obtains M input vectors $X_1$ from a previous layer of the multi-head attention layer. The M input vectors $X_1$ may also be represented as a matrix X. The vectors are transformed according to a self-attention mechanism based on an association degree between the vectors, to obtain M output vectors. The M output vectors may also be represented as a matrix Y It may be understood that when the multi-headed attention layer is a layer directly connected to the embedding layer, an input vector obtained by the multi-headed attention layer is an embedding vector output by the embedding layer. When the multi-headed attention layer is a multi-headed attention layer included in a subsequent transformer layer, an input vector obtained by the multi-headed attention layer is an output vector of a previous transformer layer. At the multi-head attention layer, a multi-head attention (multi-head attention, MHA)-based MHA layer includes a plurality of attention heads (heads) (Head 1, Head 2, ..., and Head N shown in FIG. 8).

FIG. 9 is a diagram of operations of an attention head (head). The diagram shows how the attention head (head) transforms an input matrix X into an output matrix Y As shown in FIG. 9, each input vector Xi in M input vectors <X1, X2, ..., XN> is transformed separately by using a first transformation matrix Q, a second transformation matrix K, and a third transformation matrix V, to obtain a first intermediate vector (q vector), a second intermediate vector (k vector), and a third intermediate vector (v vector) that correspond to each input vector. When an operation is performed, linear transformation may be performed, by using the first transformation matrix Q, the second transformation matrix K, and the third transformation matrix V separately, on the input matrix X that includes N input vectors, to obtain a matrix Q, a matrix K, and a matrix V of the input matrix; and then the matrices are separately decomposed, to obtain a vector q, a vector k, and a vector v that correspond to each input vector. For any $i^{th}$ input vector Xi in the M input vectors, each association degree between the $i^{th}$ input vector Xi and each input vector Xj is determined based on a point multiplication operation between a first intermediate vector (q vector, qi) corresponding to the $i^{th}$ input vector and a second intermediate vector (k vector, kj) corresponding to each input vector Xj. A point multiplication result of qi and kj may alternatively be directly determined as the association degree. However, more typically, the point multiplication result is first divided by a constant, then a softmax operation is performed, and an operation result is used as the association degree between the input vectors Xi and Xj, as shown in the following formula:

$$\alpha_{i,j} = softmax\left(\frac{q_i \cdot k_j}{\sqrt{d_k}}\right)$$

Therefore, each association degree $\alpha$i, j between the ith input vector Xi and each input vector Xj may be used as a weight factor to perform weighted combination on a third intermediate vector (v vector, vj) corresponding to each input vector Xj, thereby obtaining an ith combined vector Ci corresponding to the ith input vector Xi:

$$C_i = \sum_{j=1}^{N} \alpha_{i,j} v_j$$

Therefore, a vector sequence <C1, C2, ..., CN> or a matrix C of M combined vectors corresponding to the M input vectors may be obtained. M output vectors may be obtained based on the combined vector sequence. Specifically, in an embodiment, a vector sequence of N combined vectors may be directly used as the M output vectors, that is, Yi = Ci. In this case, the output matrix Y is the combined vector matrix C, and may also be written as follows:

$$Y = softmax\left(\frac{QK^T}{\sqrt{d_k}}\right)V$$

A processing process of the attention head (head) is described above. In an MHA architecture, an MHA layer maintains m sets of transformation matrices, and each set of transformation matrices includes the first transformation matrix Q, the second transformation matrix K, and the third transformation matrix V. Therefore, the foregoing operations may be performed in parallel, to obtain m combined vector sequences (namely, m matrices C). Each vector sequence includes N combined vectors obtained based on one set of transformation matrices. In this case, at the MHA layer, the obtained m combined vector sequences are concatenated, to obtain a concatenated matrix; and then the concatenated matrix is transformed by using a fourth transformation matrix W, to obtain the final output matrix Y The output matrix Y is split, that is, corresponds to the M output vectors <Y1, Y2, ..., YN>. According to the foregoing operation process, at the MHA layer, a transformation operation is performed based on an association degree between the N input vectors to obtain the M output vectors.

As shown in FIG. 8, the transformer layer may include the feed-forward layer. The feed-forward layer includes an input layer, an intermediate layer (intermediate layer), and an output layer. As described above, the neural network model may include a plurality of transformer layers. In an embodiment, the plurality of transformer layers may be stacked and connected in a residual network manner.

In this embodiment of this application, the encoder includes an attention head. In addition, because unmasked data units in the first data sequence are mutually visible, when embedding vectors are processed, attention association exists between any two embedding vectors in the embedding vectors. Specifically, attention information may be obtained, where the attention information indicates that when the attention head processes the embedding vectors, the attention association exists between the any two embedding vectors in the embedding vectors, and then the embedding vectors may be processed based on the attention information by using the encoder. In this way, there is a dependency relationship between each output vector and each input embedding vector (that is, a bidirectional encoder whose preceding text information and following text information are visible).

In a possible implementation, an output layer similar to the decoder may be added to an output side of the encoder. For example, the output layer may include a fully connected layer and a softmax normalization layer, and is used to predict a masked data unit in the first data sequence.

In a possible implementation, the masked data unit in the first data sequence may be predicted by using the output layer of the encoder in the PLM, to obtain a second predicted data unit, and the encoder is updated based on a difference between the second predicted data unit and an unmasked data unit in the first data sequence.

A fully connected network at the output layer of the encoder may map an output of the encoder to a fixed dimension (a dimension of a vocabulary size), and then use a softmax normalization function to obtain a probability that a target word occurs at each position. The target word herein may be a masked data unit (for example, the second predicted data unit) in the first data sequence. During training, a prediction accuracy degree of the model on current data is calculated by calculating a log-likelihood (taking a log of a probability) of a position corresponding to the target word.

In the foregoing manner, when the PLM is trained, the encoder and the decoder may be pre-trained at the same time, and joint training is effectively performed on the two modules.

603: Predict the to-be-predicted data unit based on the first sub-data, the second sub-data, and the hidden state by using the decoder in the PLM and an output layer of the decoder, to obtain a first predicted data unit.

In a possible implementation, the to-be-predicted data unit may be predicted based on the first sub-data, the second sub-data, and the hidden state by using the decoder in the PLM and the output layer of the decoder, to obtain the first predicted data unit.

In a possible implementation, the first sub-data, the second sub-data, and the hidden state may be used as inputs of the decoder in the PLM. In other words, when the to-be-predicted data unit is predicted, the preceding text information and the following text information of the to-be-predicted data unit are visible. In other words, there is a dependency relationship between the first predicted data unit obtained by predicting the to-be-predicted data unit and the first sub-data, there is a dependency relationship between the first predicted data unit obtained by predicting the to-be-predicted data unit and the second sub-data, and there is a dependency relationship between the first predicted data unit obtained by predicting the to-be-predicted data unit and the hidden state.

In an existing implementation, when the PLM is trained, the decoder of the PLM is configured to be visible only to the preceding text information, that is, left-to-right autoregression. With launch of large pre-trained models such as a generative pre-trained transformer 3 (generative pre-trained transformer 3, GPT-3) and Pangu, parameters of the models become increasingly large, and pre-training costs become increasingly high. If one time of pre-training can adapt to only a single downstream task, one time of pre-training needs to be performed for each type of generation policy at high costs, which consumes excessive resources.

The PLM is different from an existing transformer-based PLM. In this embodiment of this application, at the decoder layer, a self-attention mask module is changed to a self-attention module, so that the decoder can view the preceding text information and the following text information like the encoder. Therefore, the decoder is referred to as a bidirectional decoder.

The second embedding vector may be input to the self-attention module of the decoder of the PLM, and the hidden state output by the encoder is input to the cross-attention module, so that the decoder can learn richer semantic information. It can be seen from FIG. 7 that before a sequence is input to the model, the sequence passes through an embedding layer. At this layer, the second data sequence is converted into contiguous vectors of a fixed dimension, and then the contiguous vectors of the fixed dimension are input to the model for calculation (for details, refer to the descriptions of the embedding layer at the encoder side, and similarities are not described herein again). A fully connected network at the output layer of the decoder may map an output of the decoder to a fixed dimension (a dimension of a vocabulary size), and then use a softmax normalization function to obtain a probability that a target word occurs at each position. The target word herein may be a masked data unit (for example, the first predicted data unit) in the first data sequence. During training, a prediction accuracy degree of the model on current data is calculated by calculating a log-likelihood (taking a log of a probability) of a position corresponding to the target word.

In a possible implementation, each layer of the decoder may include a self-attention (self-attention) layer, an encoder-decoder attention (encoder-decoder attention) layer, and a feed-forward (feed-forward) network layer. The encoder-decoder attention layer may also be described as a cross-attention layer. In a decoding process, the self-attention layer of the decoder considers impact of data units in a preceding text and a following text on a currently decoded vector. The encoder-decoder attention layer of the decoder considers impact of an input of the encoder on the currently decoded vector. The feed-forward network layer of the decoder is used to perform non-linear transformation on an output vector of the encoder-decoder attention layer. At an output mapping layer (or an output layer for short), a decoded vector output by a last network layer of the decoder may be received, and the decoded vector is converted into a prediction result (for example, the first predicted data unit), for example, a new word is generated through prediction.

604: Update the encoder and the decoder based on a difference between the first predicted data unit and the to-be-predicted data unit.

After the first predicted data unit output by the decoder in a feed-forward process is obtained, losses may be determined based on the difference between a truth value (the to-be-predicted data unit) and the first predicted data unit, and the encoder and the decoder are updated based on the losses.

The model training method provided in embodiments of this application includes: obtaining the first embedding vector and the second embedding vector, where the first embedding vector corresponds to the first data sequence, the second embedding vector corresponds to the second data sequence, the second data sequence includes the first sub-data, the masked to-be-predicted data unit, and the second sub-data, the first sub-data is located before the to-be-predicted data unit in the second data sequence, and the second sub-data is located after the to-be-predicted data unit in the second data sequence; obtaining the hidden state based on the first embedding vector by using the encoder in the pre-trained language model PLM; predicting the to-be-predicted data unit based on the first sub-data, the second sub-data, and the hidden state by using the decoder in the PLM and the output layer of the decoder, to obtain the first predicted data unit; and updating the encoder and the decoder based on the difference between the first predicted data unit and the to-be-predicted data unit. In the foregoing manner, a pre-training architecture of the encoder and the bidirectional decoder is used, and in the training process, the decoder can view both the preceding text information and the following text information. Each of other types of sequence generation tasks (autoregression: from left to right or from right to left; and non-autoregression: full non-autoregression, semi-non-autoregression, and the like) may be equivalent to a subset of the PLM in this embodiment of this application. This is equivalent to that the PLM obtained according to the training method in this embodiment of this application can have a good capability of adapting to the other types of sequence generation tasks (autoregression: from left to right or from right to left; and non-autoregression: full non-autoregression, semi-non-autoregression, and the like). In other words, even if the other types of sequence generation tasks are used during subsequent fine-tuning, the PLM obtained according to the training method in this embodiment of this application can achieve good model precision. A corresponding PLM does not need to be pre-trained for each type of sequence generation task, thereby greatly reducing resources (for example, a computing resource, a storage resource, and a time resource) required for training the PLM.

The following describes the model training method in embodiments of this application with reference to a specific example.

The solution in embodiments of this application may include two parts: an offline pre-trained model parameter, and offline fine-tuning on a specific task and a specific dataset.

(1) Sequence-to-sequence pre-training process:

Step 1: Input obtaining

A large quantity of unlabeled or labeled multilingual datasets are extracted by using a network environment, and an external knowledge base Q (including aligned knowledge and a multilingual dictionary) is selected. Then, a sentence pair (X, Y) including a source sequence and a target sequence is constructed.

Step 2: Data augmentation

Data augmentation includes two optional parts:

(1) Combination of code-switching and a masking operation: A set of aligned word pairs in the input sentence pair (X, Y) is obtained based on the external knowledge Q, and then a subset is randomly selected from the set at a specific probability. Each element in the subset is matched with the source sequence and an aligned code-switching (ACS) operation is performed on the element in the subset. Each element in the subset is matched with the target sequence, and an aligned masking (AM) operation is performed on the element in the subset. Finally, new input sequences (ACS(X), AM(Y)) and new output sequences (PRE1(X), PRE1(Y)) are obtained.
(2) Dynamic dual masking operation: Mask probabilities $\upsilon$ and $\mu$ of the source sequence and target sequence are dynamically sampled from two given intervals, respectively. Then, a masking operation is performed on an input sequence CSR(X) of an encoder based on the probability $\upsilon$, to obtain a new input sequence DM(ACS(X)) and a new output sequence PRE2(X) of the encoder. A dynamic masking operation is performed on a decoder based on the probability $\mu$, to obtain a new input sequence DM(AM(Y)) and a new output sequence PRE2(Y).

Step 3: Pre-training

A pre-trained model P is randomly initialized.

The DM(ACS(X)) is input to an encoder of the model P, and the DM(AM(Y)) is input to a decoder of the model P. The model P is trained to obtain a predicted output P(X) of the encoder of P, and a predicted output P(Y) of the decoder.

(P(X), PRE2(X)) and (P(Y), PRE2(Y)) are compared, and training of modules including the decoder and the encoder in the entire model is implemented by using a cross-entropy (cross-entropy) loss function.

Steps 2 and 3 are repeated to iteratively update a parameter of the model based on the datasets, and the parameter of the model is stored after the model converges.

Step 4: Fine-tuning

Based on a specific task requirement, a parameter of a trained model is used to initialize a specific sequence-to-sequence model, and then the model is trained based on a specific dataset to achieve better effect.

According to the solution provided in embodiments of this application, sequence-to-sequence model pre-training may be completed on different datasets or in different languages for different task categories based on a user requirement. When a downstream task is fine-tuned, a left-to-right generation model, a right-to-left generation model, or a generation model with parallel decoding is fine-tuned based on an actual requirement. The following describes embodiments of this application in detail by using a translation task as an example. How to complete pre-training based on labeled data is described in Embodiment 1, and details of using unlabeled data are described in Embodiment 2.

Embodiment 1:

Step 1: Data obtaining

Translation datasets of target language pairs are obtained from a network, for example, English-Chinese, English-French, English-Korean, and English-Spain. Finally, 32 pieces of English-centric bilingual data are extracted from public data, and provided official (WMT) development sets and test sets are used to evaluate pre-training and effect of pre-training in downstream tasks. After original data is obtained, a script tokenizer.perl in Moses and a BPE (pairwise subword unit) technology are used to preprocess data in a training set, the development sets, and the test sets, to obtain all bilingual sentence pairs (X, Y). A scale of bilingual data corresponding to each language to English in the training set is shown in Table 1, where ISO represents an abbreviation of each language. For example, "Gu" represents an amount of English-Guj arati bilingual data.

**Table 1: Statistical table of an amount of labeled data in a pre-training set**

| ISO | Amount | ISO | Amount | ISO | Amount | ISO | Amount |
|-----|--------|-----|--------|-----|--------|-----|--------|
| Gu | 11k | Mt | 174k | Ko | 1.4M | Lt | 2.3M |
| Be | 24k | Ka | 198k | Ms | 1.6M | Lv | 3.0M |
| My | 28k | He | 330k | Ru | 1.8M | Bg | 3.1M |
| Mn | 28k | Tr | 383k | Fi | 2M | Vi | 3.1M |
| Af | 40k | Ro | 770k | Ja | 2M | De | 4.6M |
| Eo | 66k | Cs | 814k | It | 2M | Zh | 21M |
| Kk | 122k | Ar | 1.2M | Es | 2.1M | Fr | 36M |
| Sr | 133k | El | 1.3M | Et | 2.2M | Hi | 1.3M |

The second data collection work is to obtain external knowledge Q. Q includes external aligned knowledge, and a multilingual dictionary for code-switching. The external aligned knowledge may be a dictionary, a pre-trained word vector, or the like. In this embodiment, a third-party tool Fast-align is collected and used as an alignment knowledge base, and the multilingual dictionary is obtained via a tool MUSE.

Step 2: Data augmentation

Combination of code-switching and masking: The alignment knowledge base Q is used to obtain aligned word pair information in the bilingual sentence pairs (X, Y), then a code-switching operation is performed in a source sentence sequence based on the aligned information by using the multilingual dictionary, a masking operation is performed at a corresponding position of the target sequence, and inputs and outputs at an encoder side and a decoder side are obtained.

Dynamic dual masking: Mask probabilities $\upsilon$ and $\mu$ are sampled at an encoder side and a decoder side in given intervals, respectively. Dual masking operations are performed on the source sequence and the target sequence, and it is ensured that a mask proportion of the target sequence is greater than that of the source sequence. Finally, a model predicts and outputs all masked characters to obtain new inputs and new outputs at the encoder side and the decoder side.

Step 3: Pre-training

A sequence-to-sequence pre-trained model is initialized, and uses the structure shown in the figure.

An augmented source sequence and an augmented target sequence are respectively input to the encoder and the decoder, and then all the masked characters are predicted at output layers. The model is trained by using a cross-entropy (cross-entropy).

Steps 2 and 3 are repeated until the model converges to a stable state, and then a parameter of the pre-trained model is stored.

Step 4: Fine-tuning

The stored parameter of the model may be used to fine-tune two types of different generation tasks: autoregressive and non-autoregressive generation tasks.

(1) An autoregressive task is fine-tuned

In this example, a common left-to-right generation policy is used to verify effect of the pre-trained model on the autoregressive task. When the autoregressive task is initialized by using a pre-trained parameter, the task uses a standard transformer structure. During fine-tuning, a prediction output layer of the encoder needs to be removed, a labeled dataset of a specific language pair is used for training, and a best model is selected for testing based on performance of the development set.

**Table 2: Performance comparison of pre-training solutions on autoregressive translation tasks**

| Data | WMT19 | | WMT17 | | WMT18 | | WMT17 | | WMT17 | | WMT 19 | WMT1 9 | WMT1 4 | Avera ge |
|---|---|---|---|---|---|---|---|---|---|---|---|---|---|---|
| | 91k (low) | | 207k (low) | | 1.94M (medium) | | 2.66M (medium) | | 4.5M (medium) | | 11M (high) | 38M (extrem ely high) | 41M (extrem ely high) | |
| | En2 Kk | Kk2 En | En2 Tr | Tr2e n | En2 Et | Et2 En | En2 Fi | Fi2 En | En2 Lv | Lv2 En | en2cs | en2de | en2fr | |
| No pre-trainin g | 0.2 | 0.8 | 9.5 | 12.2 | 17.9 | 22.6 | 20.2 | 21.8 | 12.9 | 15.6 | 16.5 | 30.9 | 41.4 | 17.1 |
| mBA RT | 2.5 | 7.4 | 17.8 | 22.5 | 21.4 | 27.8 | 22.4 | 28.5 | 15.9 | 19.3 | 18 | 30.5 | 41 | 21.1 |
| mRA SP | 8.3 | 12.3 | 20 | 23.4 | 20.9 | 26.8 | 24 | 28 | 21.6 | 24.4 | 19.9 | 35.2 | 44.3 | 23.7 |
| Ours | 8.8 | 12.9 | 23.9 | 23.6 | 22.2 | 28.5 | 25.4 | 28.7 | 22 | 24.3 | 21.5 | 39.2 | 43.7 | 24.9 |
| impro ve | +8.6 | +12. 1 | +14. 4 | +11. 4 | +4.3 | +5.9 | +5.2 | +6.9 | +9.1 | +8.7 | +5.0 | +8.3 | +2.3 | +7.9 |

After training is completed, performance of compared models on test sets of 13 translation tasks (including low (< 1M), medium (> 1M and < 10M), high (> 10M and < 25M), and extremely high resource (> 25M) scenarios) is verified. BLEU (↑) is used as an indicator for evaluating quality of sequence generation (translation). Table 2 shows performance effect of the models on the autoregressive tasks.

(2) A non-autoregressive task is fine-tuned

The non-autoregressive task is initialized by using a parameter of the pre-trained model. A prediction output layer of the encoder is directly removed, a labeled dataset of a specific language pair is used for training, and a best model also is selected for testing based on performance of the development set. After training is completed, performance of the model on six common datasets is verified. BLEU (↑) is also used as an evaluation indicator. Table 3 shows performance effect of the model on non-autoregressive tasks.

**Table 3: Performance comparison of pre-training solutions on the non-autoregressive translation tasks**

| Data | IWSLT14 | | WMT16 | | WMT14 | | Average |
|---|---|---|---|---|---|---|---|
| | 16k (low) | | 770k (low) | | 4.5M (medium) | | |
| | en2de | de2en | en2ro | ro2en | en2de | de2en | |
| No pre-training | 22.0 | 28.4 | 31.5 | 31.7 | 26.1 | 29.0 | 28.1 |
| Ours | 26.7 | 33.7 | 33.3 | 33.0 | 27.2 | 29.9 | 30.6 |

Embodiment 2:

Embodiment 2 describes how to perform pre-training based on unlabeled data in this solution. In an actual use process, based on an actual requirement, labeled data may be used for training, or unlabeled data may be used, or both labeled data and unlabeled data may be used.

First, a large quantity of unlabeled datasets are collected from a network. A translation task is still used as an example (unlabeled data is monolingual data). Table 4 collects statistics on a scale of unlabeled data that can be used.

**Table 4: Statistical table of an amount of unlabeled data in a pre-training set**

| ISO | Sizes | ISO | Sizes |
|---|---|---|---|
| Gu | 815k | Ru | 9.9M |
| Kk | 1.8M | Es | 9.9M |
| Sr | 3.7M | Et | 5.3M |
| Fi | 9.9M | Lt | 2.8M |
| Ja | 3.4M | Lv | 11.3M |
| It | 9.9M | Bg | 9.9M |
| Tr | 9.9M | De | 15M |
| Ro | 20M | Zh | 4.4M |
| Cs | 9.9M | Fr | 15M |
| El | 8.3M | En | 15M |
| Hi | 9.9M | | |

For the unlabeled data, a sentence is copied to obtain a language pair (X, Y) in which a source sequence and a target sequence are the same, where X = Y Execution processes of the solution 2 and the solution 1 are basically consistent. The following describes only different details.

(1) In a step of combining code-switching with a masking operation, because the source sequence is completely consistent with the target sequence, that is, all words are aligned, an aligned word pair set may be obtained without using external knowledge.

(2) During dynamic dual masking, to prevent a prediction output layer of a decoder from directly copying information from the source sequence in a training process, same characters are masked at both sides, and prediction is performed at output layers, separately.

To verify effect of the solution 2, unlabeled (monolingual) data and labeled (bilingual) data are used for pre-training, and then fine-tuning is performed based on a left-to-right generation task. Table 5 shows performance of pre-trained models on four translation tasks.

**Table 5: Performance comparison of the pre-trained models in which unlabeled data is used on autoregressive translation tasks**

| Data | WMT19 | | WMT18 | | Average |
|------|-------|------|-------|------|---------|
| | 91k (low) | | 1.94M (medium) | | |
| | kk2en | en2kk | en2et | et2en | |
| No pre-training | 0.2 | 0.8 | 17.9 | 22.6 | 10.4 |
| Bilingual | 7.8 | 5.5 | 19.1 | 24.4 | 14.2 |
| Monolingual | 5.4 | 5.4 | 18.9 | 23.5 | 13.3 |
| Bilingual + monolingual | 9.0 | 5.6 | 19.0 | 25.2 | 14.7 |

In Embodiment 1, it is verified that pre-training is performed by using a labeled dataset in embodiments of this application. Because of a unified pre-training solution provided in embodiments of this application, the autoregressive and non-autoregressive tasks can be fine-tuned after only one time of pre-training. In the autoregressive task, the performance of the model in 13 translation directions shows that the solution can achieve better effect than an existing pre-training method. As shown in Table 2, in each translation direction from the low resource scenario to the extremely high resource scenario, compared with performance of direct training (initialization is performed without using the pre-training parameter), performance of our solutions is improved by 2.3 BLEU to 14.4 BLEU, and an average improvement reaches 7.9 BLEU. Compared with a best existing pre-training solution, our solutions outperform the mBART by 3.8 BLEU and the mRASP by 1.2 BLEU on average. In the non-autoregressive task shown in Table 3, the present invention is the first pre-training solution applicable to non-autoregression. It can be seen that the model also achieves better performance in six translation directions, and the performance is improved by 2.5 BLEU on average compared with that of direct training.

In Embodiment 2, effect of performing pre-training by using an unlabeled dataset and then fine-tuning an autoregressive task in embodiments of this application is supplemented and verified. As shown in Table 5, when only the unlabeled (monolingual) dataset is used, effect of the model is improved by 2.9 BLEU on average, which is decreased by 0.9 BLEU on average compared with effect achieved when only labeled data is used. When both labeled data and unlabeled data are used, effect of the model is improved by 4.3 BLEU on average in four directions.

Compared with the conventional technology, a unified pre-training framework included in embodiments of this application may perform pre-training by using both the labeled data and the unlabeled data. The stored parameter of the model may be used to initialize autoregressive tasks (including left-to-right generation and right-to-left generation) and non-autoregressive tasks. The combination of code-switching based on the external knowledge base and the masking operation, dynamic dual masking, and an operation that the encoder outputs prediction included in embodiments of the present invention all have a positive impact on translation performance. Table 6 shows verification of impact of the three operations on the performance in the autoregressive translation tasks.

**Table 6: Verification of pre-training performance by some functions in embodiments of the present invention**

| Data | WMT19 (91k) | | WMT18 | | Average |
|------|-------------|------|-------|------|---------|
| | 91k (low) | | 1.94M (medium) | | |
| | kk2en | en2kk | en2et | et2en | |
| Baseline | 9.0 | 5.6 | 19.0 | 25.2 | 14.7 |
| No switching or masking | 8.4 | 5.1 | 18.2 | 24.3 | 14.0 |
| Static masking | 7.3 | 4.4 | 17.6 | 23.5 | 13.2 |
| No encoder output | 5.0 | 3.6 | 17.0 | 21.6 | 11.8 |

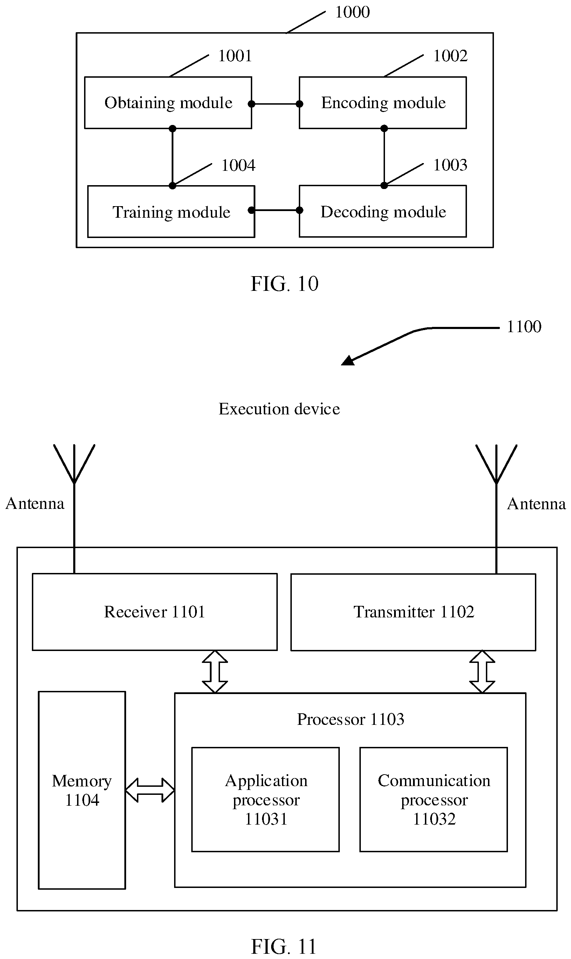

Based on the embodiments corresponding to FIG. 1 to FIG. 9, to better implement the foregoing solutions in embodiments of this application, the following further provides related devices configured to implement the foregoing solutions. Specifically, refer to FIG. 10. FIG. 10 is a diagram of a structure of a model training apparatus 1000 according to an embodiment of this application. The model training apparatus 1000 may be a terminal device or a server, and the model training apparatus 1000 may include:

an obtaining module 1001, configured to obtain a first embedding vector and a second embedding vector, where the first embedding vector corresponds to a first data sequence, the second embedding vector corresponds to a second data sequence, the second data sequence includes first sub-data, a masked to-be-predicted data unit, and second sub-data, the first sub-data is located before the to-be-predicted data unit in the second data sequence, and the second sub-data is located after the to-be-predicted data unit in the second data sequence.

For specific descriptions of the obtaining module 1001, refer to the descriptions of step 601 in the foregoing embodiment. Details are not described herein again.

The apparatus further includes an encoding module 1002, configured to obtain a hidden state based on the first embedding vector by using an encoder in a pre-trained language model PLM.

For specific descriptions of the encoding module 1002, refer to the descriptions of step 602 in the foregoing embodiment. Details are not described herein again.

The apparatus further includes a decoding module 1003, configured to predict the to-be-predicted data unit based on the first sub-data, the second sub-data, and the hidden state by using a decoder in the PLM and an output layer of the decoder, to obtain a first predicted data unit.

For specific descriptions of the decoding module 1003, refer to the descriptions of step 603 in the foregoing embodiment. Details are not described herein again.

The apparatus further includes a training module 1004, configured to update the encoder and the decoder based on a difference between the first predicted data unit and the to-be-predicted data unit.

For specific descriptions of the training module 1004, refer to the descriptions of step 604 in the foregoing embodiment. Details are not described herein again.

In a possible implementation, the obtaining module is further configured to:

obtain a first initial data sequence; and
determine, in a probability sampling manner, whether at least one data unit in the first initial data sequence is masked, to obtain the second data sequence, where a probability value obtained through probability sampling is used as a probability that the at least one data unit is masked.

In a possible implementation, the obtaining module is further configured to:

obtain a second initial data sequence; and
determine, in the probability sampling manner, whether at least one data unit in the second initial data sequence is masked, to obtain the first data sequence, where when the probability sampling is performed, a probability that a data unit in the first initial data sequence is masked is greater than a probability that a data unit in the second initial data sequence is masked.

In a possible implementation, the encoding module is further configured to:

predict a masked data unit in the first data sequence by using an output layer of the encoder in the PLM, to obtain a second predicted data unit; and
the training module is further configured to update the encoder based on a difference between the second predicted data unit and an unmasked data unit in the first data sequence.

In a possible implementation, the PLM is used to implement a sequence conversion task between texts of different language types; and the obtaining module is further configured to:

obtain a third initial data sequence, where the second data sequence and the third initial data sequence are texts having same semantics and expressed by using different language types, and a first data unit in the third initial data sequence and the to-be-predicted data unit have same semantics; and
replace the first data unit in the third initial data sequence with a second data unit, to obtain the first data sequence, where the second data unit and the first data unit have same semantics, and are expressed by using different language types.

In a possible implementation, the obtaining module is further configured to:

obtain a fourth initial data sequence; and
mask a data unit that has same semantics as the first data unit and that is in the fourth initial data sequence, to obtain the second data sequence.

In a possible implementation,

the first sub-data or the second sub-data includes an unmasked data unit, and the second embedding vector includes semantic information of the unmasked data unit and a position relationship between the unmasked data unit and another data unit in the second data sequence;
the first sub-data or the second sub-data includes a masked data unit, and the second embedding vector includes a position relationship between the masked data unit and another data unit in the second data sequence; or
the second embedding vector includes a position relationship between the to-be-predicted data unit and another data unit in the second data sequence.

In a possible implementation, the first data sequence on which a masking operation is not performed and the second data sequence on which a masking operation is not performed are same data sequences; or
the first data sequence on which a masking operation is not performed and the second data sequence on which a masking operation is not performed are different data sequences on which sample labeling is performed.

In a possible implementation, the first data sequence and the second data sequence are text data.

The following describes an execution device provided in embodiments of this application. FIG. 11 is a diagram of a structure of an execution device according to an embodiment of this application. An execution device 1100 may be specifically represented as a virtual reality VR device, a mobile phone, a tablet, a notebook computer, an intelligent wearable device, a monitoring data processing device, a server, or the like. This is not limited herein. Specifically, the execution device 1100 includes a receiver 1101, a transmitter 1102, a processor 1103, and a memory 1104 (there may be one or more processors 1103 in the execution device 1100, and one processor is used as an example in FIG. 11). The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data to the processor 1103. Apart of the memory 1104 may further include a non-volatile random access memory (non-volatile random access memory, NVRAM). The memory 1104 stores a processor and operation instructions, an executable module or a data structure, a subset thereof, or an extended set thereof. The operation instructions may include various operation instructions for implementing various operations.

The processor 1103 controls an operation of the execution device. In specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in the foregoing embodiments of this application may be applied to the processor 1103, or may be implemented by the processor 1103. The processor 1103 may be an integrated circuit chip, and has a signal processing capability. In an implementation process, the steps in the foregoing methods may be completed by using a hardware integrated logical circuit in the processor 1103, or by using instructions in a form of software. The processor 1103 may be a general-purpose processor, a digital signal processor (digital signal processing, DSP), a microprocessor or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1103 may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1104. The processor 1103 reads information in the memory 1104 and completes the steps in the foregoing methods in combination with hardware of the processor.

The receiver 1101 may be configured to receive input digit or character information, and generate a signal input related to a related setting and function control of the execution device. The transmitter 1102 may be configured to output digit or character information through a first interface. The transmitter 1102 may be further configured to send instructions to a disk group through the first interface, to modify data in the disk group. The transmitter 1102 may further include a display device such as a display.

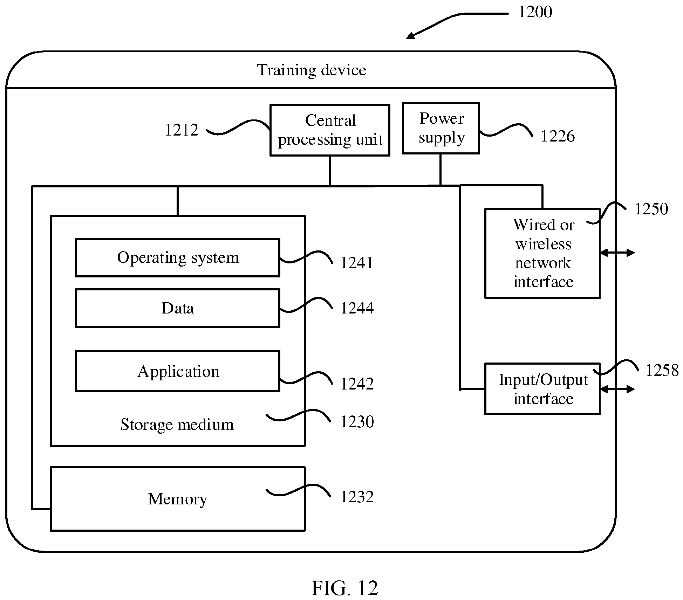

An embodiment of this application further provides a training device. FIG. 12 is a diagram of a structure of the training device according to an embodiment of this application. Specifically, a training device 1200 is implemented by one or more servers, the training device 1200 may vary greatly with configuration or performance, and may include one or more central processing units (central processing units, CPUs) 1212 (for example, one or more processors), a memory 1232, and one or more storage media 1230 (for example, one or more mass storage devices) that store an application 1242 or data 1244. The memory 1232 and the storage medium 1230 may be transient storage or persistent storage. A program stored in the storage medium 1230 may include one or more modules (not shown in the figure), and each module may include a series of instruction operations for the training device. Further, the central processing unit 1212 may be configured to communicate with the storage medium 1230, and perform a series of instruction operations in the storage medium 1230 on the training device 1200.

The training device 1200 may further include one or more power supplies 1226, one or more wired or wireless network interfaces 1250, one or more input/output interfaces 1258, or one or more operating systems 1241, such as Windows ServerTM, Mac OS XTM, UnixTM, LinuxTM, and FreeBSDTM.

In this embodiment of this application, the central processing unit 1212 is configured to perform the model training method described in the embodiment corresponding to FIG. 6a.

An embodiment of this application further provides a computer program product. When the computer program product runs on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program for processing a signal, and when the program is run on a computer, the computer is enabled to perform the steps performed by the foregoing execution device; or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the model training method described in embodiments, or a chip in a training device performs the model training method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

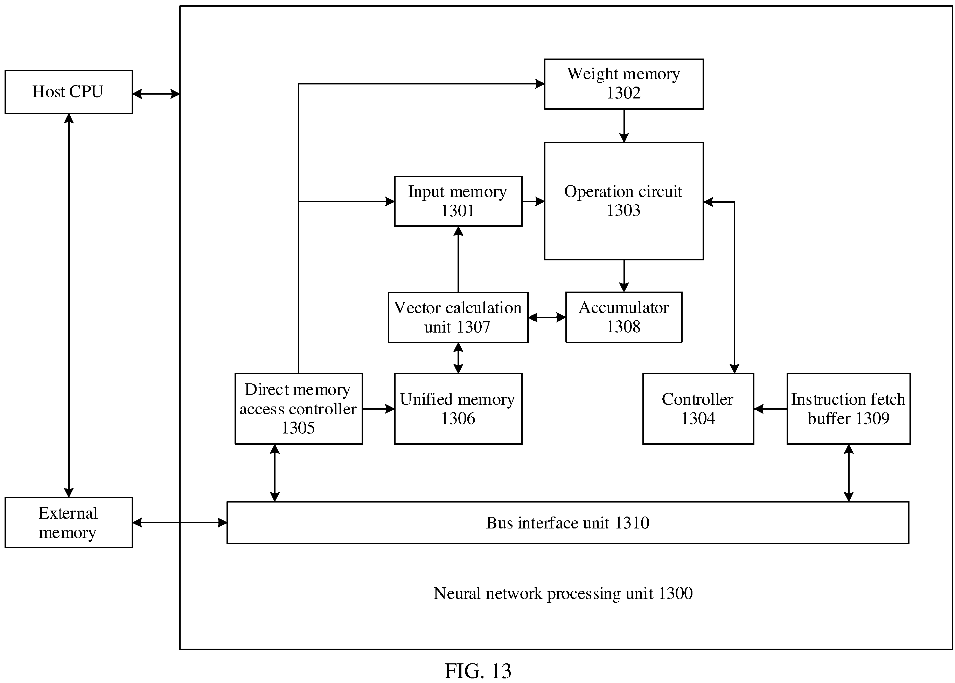

Specifically, refer to FIG. 13. FIG. 13 is a diagram of a structure of a chip according to an embodiment of this application. The model training method described in the embodiment corresponding to FIG. 6a may be implemented in the chip shown in FIG. 13. Specifically, the chip may be represented as a neural network processing unit NPU 1300. The NPU 1300 is mounted to a host CPU (Host CPU) as a coprocessor, and the host CPU allocates a task. A core part of the NPU is an operation circuit 1303, and a controller 1304 controls the operation circuit 1303 to extract data from a memory (a weight memory or an input memory) and perform an operation.

Optionally, the model training method described in the embodiment corresponding to FIG. 6a may be jointly completed by the host CPU and the NPU in the chip shown in FIG. 13.

In some implementations, the operation circuit 1303 includes a plurality of process engines (process engines, PEs). In some implementations, the operation circuit 1303 is a two-dimensional systolic array. The operation circuit 1303 may alternatively be a one-dimensional systolic array or another electronic circuit that can perform mathematical operations such as multiplication and addition. In some implementations, the operation circuit 1303 is a general-purpose matrix processor.

For example, it is assumed that there is an input matrix A, a weight matrix B, and an output matrix C. The operation circuit fetches data corresponding to the matrix B from the weight memory 1302, and buffers the data on each PE in the operation circuit. The operation circuit fetches data of the matrix A from the input memory 1301 to perform a matrix operation with the matrix B to obtain a partial result or a final result of a matrix, and stores the obtained partial result or final result of the matrix in an accumulator (accumulator) 1308.

A unified memory 1306 is configured to store input data and output data. Weight data is directly transferred to the weight memory 1302 through a direct memory access controller (Direct Memory Access Controller, DMAC) 1305. The input data is also transferred to the unified memory 1306 through the DMAC.

BIU is the abbreviation of a bus interface unit. A bus interface unit 1310 is used for interaction between an AXI bus and the DMAC and interaction between the AXI bus and an instruction fetch buffer (Instruction Fetch Buffer, IFB) 1309.

The bus interface unit 1310 (Bus Interface Unit, Bill for short) is used by the instruction fetch buffer 1309 to obtain instructions from an external memory, and is further used by the direct memory access controller 1305 to obtain original data of the input matrix A or the weight matrix B from the external memory.

The DMAC is mainly configured to transfer input data in the external memory DDR to the unified memory 1306, transfer the weight data to the weight memory 1302, or transfer the input data to the input memory 1301.

A vector calculation unit 1307 includes a plurality of operation processing units. If required, further processing is performed on an output of the operation circuit, for example, vector multiplication, vector addition, an exponential operation, a logarithmic operation, or value comparison. The vector calculation unit 1307 is mainly used for non-convolutional /fully connected layer network calculation in a neural network, such as batch normalization (batch normalization), pixel-level summation, and upsampling of a feature map.

In some implementations, the vector calculation unit 1307 can store a processed output vector in the unified memory 1306. For example, the vector calculation unit 1307 may apply a linear function or a non-linear function to the output of the operation circuit 1303, for example, perform linear interpolation on a feature map extracted at a convolutional layer. For another example, the linear function or the non-linear function is applied to a vector of an accumulated value to generate an activation value. In some implementations, the vector calculation unit 1307 generates a normalized value, a pixel-level summation value, or a normalized value and a pixel-level summation value. In some implementations, the processed output vector can be used as an activation input of the operation circuit 1303, for example, to be used in a subsequent layer in the neural network.

The instruction fetch buffer (instruction fetch buffer) 1309 connected to the controller 1304 is configured to store instructions used by the controller 1304.

The unified memory 1306, the input memory 1301, the weight memory 1302, and the instruction fetch buffer 1309 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected based on actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a training device or a data center, including one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. A model training method, wherein the method comprises:

   obtaining a first embedding vector and a second embedding vector, wherein the first embedding vector corresponds to a first data sequence, the second embedding vector corresponds to a second data sequence, the second data sequence comprises first sub-data, a masked to-be-predicted data unit, and second sub-data, the first sub-data is located before the to-be-predicted data unit in the second data sequence, and the second sub-data is located after the to-be-predicted data unit in the second data sequence;

obtaining a hidden state based on the first embedding vector by using an encoder in a pre-trained language model PLM;

predicting the to-be-predicted data unit based on the first sub-data, the second sub-data, and the hidden state by using a decoder in the PLM and an output layer of the decoder, to obtain a first predicted data unit; and

updating the encoder and the decoder based on a difference between the first predicted data unit and the to-be-predicted data unit.

2. The method according to claim 1, wherein the method further comprises:

obtaining a first initial data sequence; and

determining, in a probability sampling manner, whether at least one data unit in the first initial data sequence is masked, to obtain the second data sequence, wherein a probability value obtained through probability sampling is used as a probability that the at least one data unit is masked.

3. The method according to claim 2, wherein the method further comprises:

obtaining a second initial data sequence; and

determining, in the probability sampling manner, whether at least one data unit in the second initial data sequence is masked, to obtain the first data sequence, wherein when the probability sampling is performed, a probability that a data unit in the first initial data sequence is masked is greater than a probability that a data unit in the second initial data sequence is masked.

4. The method according to claim 3, wherein the method further comprises:

predicting a masked data unit in the first data sequence by using an output layer of the encoder in the PLM, to obtain a second predicted data unit; and

updating the encoder based on a difference between the second predicted data unit and an unmasked data unit in the first data sequence.

5. The method according to claim 1 or 2, wherein the PLM is used to implement a sequence conversion task between texts of different language types; and the method further comprises:

obtaining a third initial data sequence, wherein the second data sequence and the third initial data sequence are texts having same semantics and expressed by using different language types, and a first data unit in the third initial data sequence and the to-be-predicted data unit have same semantics; and

replacing the first data unit in the third initial data sequence with a second data unit, to obtain the first data sequence, wherein the second data unit and the first data unit have same semantics, and are expressed by using different language types.

6. The method according to claim 5, wherein the method further comprises:

obtaining a fourth initial data sequence; and

masking a data unit that has same semantics as the first data unit and that is in the fourth initial data sequence, to obtain the second data sequence.

7. The method according to any one of claims 1 to 6, wherein

the first sub-data or the second sub-data comprises an unmasked data unit, and the second embedding vector comprises semantic information of the unmasked data unit and a position relationship between the unmasked data unit and another data unit in the second data sequence;

the first sub-data or the second sub-data comprises a masked data unit, and the second embedding vector comprises a position relationship between the masked data unit and another data unit in the second data sequence; or

the second embedding vector comprises a position relationship between the to-be-predicted data unit and another data unit in the second data sequence.

8. The method according to any one of claims 1 to 7, wherein the first data sequence on which a masking operation is not performed and the second data sequence on which a masking operation is not performed are same data sequences; or
the first data sequence on which a masking operation is not performed and the second data sequence on which a masking operation is not performed are different data sequences on which sample labeling is performed.

9. The method according to any one of claims 1 to 8, wherein the first data sequence and the second data sequence are text data.

10. The method according to any one of claims 1 to 9, wherein the first data sequence and the second data sequence are data having same semantics and expressed by using different language types.

11. A model training apparatus, wherein the apparatus comprises:

an obtaining module, configured to obtain a first embedding vector and a second embedding vector, wherein the first embedding vector corresponds to a first data sequence, the second embedding vector corresponds to a second data sequence, the second data sequence comprises first sub-data, a masked to-be-predicted data unit, and second sub-data, the first sub-data is located before the to-be-predicted data unit in the second data sequence, and the second sub-data is located after the to-be-predicted data unit in the second data sequence;
an encoding module, configured to obtain a hidden state based on the first embedding vector by using an encoder in a pre-trained language model PLM;
a decoding module, configured to predict the to-be-predicted data unit based on the first sub-data, the second sub-data, and the hidden state by using a decoder in the PLM and an output layer of the decoder, to obtain a first predicted data unit; and
a training module, configured to update the encoder and the decoder based on a difference between the first predicted data unit and the to-be-predicted data unit.

12. The apparatus according to claim 11, wherein the obtaining module is further configured to:

obtain a first initial data sequence; and
determine, in a probability sampling manner, whether at least one data unit in the first initial data sequence is masked, to obtain the second data sequence, wherein a probability value obtained through probability sampling is used as a probability that the at least one data unit is masked.

13. The apparatus according to claim 12, wherein the obtaining module is further configured to:

obtain a second initial data sequence; and
determine, in the probability sampling manner, whether at least one data unit in the second initial data sequence is masked, to obtain the first data sequence, wherein when the probability sampling is performed, a probability that a data unit in the first initial data sequence is masked is greater than a probability that a data unit in the second initial data sequence is masked.

14. The apparatus according to claim 13, wherein the encoding module is further configured to:

predict a masked data unit in the first data sequence by using an output layer of the encoder in the PLM, to obtain a second predicted data unit; and
the training module is further configured to update the encoder based on a difference between the second predicted data unit and an unmasked data unit in the first data sequence.

15. The apparatus according to claim 11 or 12, wherein the PLM is used to implement a sequence conversion task between texts of different language types; and the obtaining module is further configured to:

obtain a third initial data sequence, wherein the second data sequence and the third initial data sequence are texts having same semantics and expressed by using different language types, and a first data unit in the third initial data sequence and the to-be-predicted data unit have same semantics; and
replace the first data unit in the third initial data sequence with a second data unit, to obtain the first data sequence, wherein the second data unit and the first data unit have same semantics, and are expressed by using different language types.

16. The apparatus according to claim 15, wherein the obtaining module is further configured to:

obtain a fourth initial data sequence; and
mask a data unit that has same semantics as the first data unit and that is in the fourth initial data sequence, to obtain the second data sequence.

17. The apparatus according to any one of claims 11 to 15, wherein

the first sub-data or the second sub-data comprises an unmasked data unit, and the second embedding vector comprises semantic information of the unmasked data unit and a position relationship between the unmasked data unit and another data unit in the second data sequence;
the first sub-data or the second sub-data comprises a masked data unit, and the second embedding vector comprises a position relationship between the masked data unit and another data unit in the second data sequence; or
the second embedding vector comprises a position relationship between the to-be-predicted data unit and another data unit in the second data sequence.

18. The apparatus according to any one of claims 11 to 17, wherein the first data sequence on which a masking operation is not performed and the second data sequence on which a masking operation is not performed are same data sequences; or
the first data sequence on which a masking operation is not performed and the second data sequence on which a masking operation is not performed are different data sequences on which sample labeling is performed.

19. The apparatus according to any one of claims 11 to 18, wherein the first data sequence and the second data sequence are text data.

20. The apparatus according to any one of claims 11 to 19, wherein the first data sequence and the second data sequence are data having same semantics and expressed by using different language types.

21. A data processing method, wherein the method comprises:

obtaining an updated PLM and to-be-processed data that are obtained according to the method according to any one of claims 1 to 10; and
processing the to-be-processed data by using the updated PLM, to obtain a processing result.

22. A data processing apparatus, wherein the apparatus is configured to: obtain an updated PLM and to-be-processed data that are obtained according to the method according to any one of claims 1 to 10; and process the to-be-processed data by using the updated PLM, to obtain a processing result.

23. A data processing apparatus, wherein the apparatus comprises a memory and a processor;
and the memory stores code, and the processor is configured to obtain the code and perform the method according to any one of claims 1 to 10.

24. A computer storage medium, wherein the computer storage medium stores one or more instructions, and when the instructions are executed by one or more computers, the one or more computers are enabled to implement the method according to any one of claims 1 to 10.

25. A computer program product, wherein the computer program product comprises code, and when the code is executed, the steps in the method according to any one of claims 1 to 10 are implemented.

Intelligent information chain

Smart product and industry application

Translation/Text analysis/... | Speech/Vision/Image/...

Data

Data processing: | Data training/Machine learning/ Deep learning | Searching/ Inference/Decision- making | ...

Infrastructure | Sensor | Intelligent chip | Basic platform | ...

IT value chain

FIG. 1

FIG. 2

EP 4 471 616 A1

User
用户

User equipment
用户设备

13:21

Interaction interface
交互接口

Speech/Query
statement/Text...
文本...

Voice response/Response
statement/Text...
文本...

...
...

Memory
器

Processor:

Data training/Machine
learning/Deep learning
深度学习

Searching/
Inference/
Decision-making
决策

...
...

FIG. 3a

FIG. 3b

Wer    bist

Encoder → Autoregressive decoder

<s>  who  are  you    <s>  Wer  [M]  [M]

FIG. 3c

Wer    bist    du

Encoder → Fully non-autoregressive decoder

<s>  who  are  you    [M]  [M]  [M]

FIG. 3d

Wer    —    du

Encoder → Semi-non-autoregressive decoder

<s>  who  are  you    [M]  bist  [M]

FIG. 3e

Translation result

Decoder

Output mapping layer

Encoder

A plurality of network layers → A plurality of network layers

Word embedding layer

Word embedding layer

Source corpus

Target corpus

FIG. 3f

300

Data storage
system
350

Execution device 310

Communication
network

Local device
301

Local device
302

For example

FIG. 4

FIG. 5

Obtain a first embedding vector and a second embedding vector, where the first embedding vector corresponds to a first data sequence, the second embedding vector corresponds to a second data sequence, the second data sequence includes first sub-data, a masked to-be-predicted data unit, and second sub-data, the first sub-data is located before the to-be-predicted data unit in the second data sequence, and the second sub-data is located after the to-be-predicted data unit in the second data sequence — 601

Obtain a hidden state based on the first embedding vector by using an encoder in a pre-trained language model PLM — 602

Predict the to-be-predicted data unit based on the first sub-data, the second sub-data, and the hidden state by using a decoder in the PLM and an output layer of the decoder, to obtain a first predicted data unit — 603

Update the encoder and the decoder based on a difference between the first predicted data unit and the to-be-predicted data unit — 604

FIG. 6a

FIG. 6b

| on | | | tanzen | | gras |

**Fully connected layer + normalization layer**　　　**Fully connected layer + normalization layer**

**Bidirectional encoder (x N)**　　　**Bidirectional decoder (x N)**

Feed-forward network

Feed-forward network

Cross-attention module

Self-attention module

Self-attention module

**Embedding layer**　　　**Embedding layer**

We　danse　[M]　the　grass　　　Wir　[M]　auf　[M]　[M]

FIG. 7

FIG. 8

Y ↑

Linear
transformation

↑

Concatenation

↑

Point multiplication

Softmax

↑

Point multiplication

q vector

k vector

v vector

↑

Linear
transformation

Linear
transformation

Linear
transformation

↑

Q

K

V

X

FIG. 9

1000

1001

Obtaining module

1002

Encoding module

1004

Training module

1003

Decoding module

FIG. 10

1100

Execution device

Antenna

Antenna

Receiver 1101

Transmitter 1102

Processor 1103

Memory
1104

Application
processor
11031

Communication
processor
11032

FIG. 11

1200

Training device

1212 — Central processing unit

Power supply — 1226

Wired or wireless network interface — 1250

Operating system — 1241

Data — 1244

Application — 1242

Storage medium — 1230

Input/Output interface — 1258

Memory — 1232

FIG. 12

| Host CPU |

| Weight memory 1302 |

| Input memory 1301 |

| Operation circuit 1303 |

| Vector calculation unit 1307 |

| Accumulator 1308 |

| Direct memory access controller 1305 |

| Unified memory 1306 |

| Controller 1304 |

| Instruction fetch buffer 1309 |

| External memory |

| Bus interface unit 1310 |

Neural network processing unit 1300

FIG. 13

## INTERNATIONAL SEARCH REPORT

International application No.

**PCT/CN2023/076756**

### A. CLASSIFICATION OF SUBJECT MATTER

G06F16/332(2019.01)i;G06F16/33(2019.01)i;G06N3/04(2023.01)i

According to International Patent Classification (IPC) or to both national classification and IPC

### B. FIELDS SEARCHED

Minimum documentation searched (classification system followed by classification symbols)

IPC： G06F; G06N; G06K

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI, IEEE: 编码器, 解码器, 双向解码器, 掩码, 遮掩, 掩盖, 不可见, 动态, 翻译, 上文, 下文, 前文, 后文, 模型, 训练, 预训练, 源, 原, 目标, 译文, 语料, 语言, 平行, 双语, 隐状态, 自回归, 自右向左, 自左向右, 任务, bidirectional, bi-directional, decoder, encoder, GPT, mask, dynamic, transformer, pretrain, pre-train, task, translation, source, target, language, parallel, preceding, following, context, autoregression, hidden state, right, left

### C. DOCUMENTS CONSIDERED TO BE RELEVANT

| Category* | Citation of document, with indication, where appropriate, of the relevant passages | Relevant to claim No. |
|---|---|---|
| PX | CN 114676234 A (HUAWEI TECHNOLOGIES CO., LTD.) 28 June 2022 (2022-06-28) claims 1-25 | 1-25 |
| A | CN 112257472 A (TENCENT TECHNOLOGY (SHENZHEN) CO., LTD.) 22 January 2021 (2021-01-22) entire document | 1-25 |
| A | CN 113297841 A (HARBIN INSTITUTE OF TECHNOLOGY) 24 August 2021 (2021-08-24) entire document | 1-25 |
| A | US 2021182504 A1 (TENCENT TECHNOLOGY (SHENZHEN) CO., LTD.) 17 June 2021 (2021-06-17) entire document | 1-25 |
| A | CN 113449529 A (BEIJING KINGSOFT DIGITAL ENTERTAINMENT CO., LTD. et al.) 28 September 2021 (2021-09-28) entire document | 1-25 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 May 2023** | **16 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/076756**

**C.    DOCUMENTS CONSIDERED TO BE RELEVANT**

| Category* | Citation of document, with indication, where appropriate, of the relevant passages | Relevant to claim No. |
|---|---|---|
| A | CN 110046359 A (SOOCHOW UNIVERSITY) 23 July 2019 (2019-07-23)<br>entire document | 1-25 |
| A | CN 113761946 A (ALIBABA GROUP HOLDING LTD.) 07 December 2021 (2021-12-07)<br>entire document | 1-25 |
| A | US 2020034436 A1 (GOOGLE L.L.C.) 30 January 2020 (2020-01-30)<br>entire document | 1-25 |

Form PCT/ISA/210 (second sheet) (July 2022)

**INTERNATIONAL SEARCH REPORT**
Information on patent family members

| International application No. |
| --- |
| **PCT/CN2023/076756** |

| Patent document cited in search report | | | Publication date (day/month/year) | Patent family member(s) | | | Publication date (day/month/year) |
| --- | --- | --- | --- | --- | --- | --- | --- |
| CN | 114676234 | A | 28 June 2022 | None | | | |
| CN | 112257472 | A | 22 January 2021 | HK | 40037358 | A0 | 11 June 2021 |
| CN | 113297841 | A | 24 August 2021 | None | | | |
| US | 2021182504 | A1 | 17 June 2021 | WO | 2020108400 | A1 | 04 June 2020 |
| | | | | CN | 109543199 | A | 29 March 2019 |
| | | | | CN | 109543199 | B | 10 June 2020 |
| CN | 113449529 | A | 28 September 2021 | None | | | |
| CN | 110046359 | A | 23 July 2019 | None | | | |
| CN | 113761946 | A | 07 December 2021 | None | | | |
| US | 2020034436 | A1 | 30 January 2020 | US | 11138392 | B2 | 05 October 2021 |

Form PCT/ISA/210 (patent family annex) (July 2022)

**REFERENCES CITED IN THE DESCRIPTION**

**Patent documents cited in the description**

- CN 202210164992